(19) Europäisches Patentamt
European Patent Office
Office européen des brevets

(11) **EP 4 723 452 A1**

(12) **EUROPEAN PATENT APPLICATION**
published in accordance with Art. 153(4) EPC

(43) Date of publication:
08.04.2026 Bulletin 2026/15

(21) Application number: 23940428.8

(22) Date of filing: 07.11.2023

(51) International Patent Classification (IPC):
$H02M\ 1/00$ (2006.01)   $H02M\ 1/42$ (2007.01)
$H02M\ 3/335$ (2006.01)

(52) Cooperative Patent Classification (CPC):
Y02B 70/10

(86) International application number:
PCT/CN2023/130207

(87) International publication number:
WO 2024/250552 (12.12.2024 Gazette 2024/50)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 05.06.2023 CN 202310661163

(71) Applicant: Shenzhen Contemporary E-energy
Technology Co.,
Limited
Shenzhen, Guangdong 518000 (CN)

(72) Inventors:
• SU, Xin
  Shenzhen, Guangdong 518000 (CN)
• BI, Shuowei
  Shenzhen, Guangdong 518000 (CN)

(74) Representative: Viering, Jentschura & Partner
mbB
Patent- und Rechtsanwälte
Am Brauhaus 8
01099 Dresden (DE)

(54) **EXPANDABLE POWER SUPPLY CIRCUIT SYSTEM AND CONTROL METHOD THEREFOR**

(57)    The present application discloses a scalable power circuit, including a plurality of power circuit units, where each power circuit unit includes a main inductor, a switch, and a plurality of circuit assemblies, and each circuit assembly includes a capacitor and a transformer. A plurality of circuit assemblies are provided in each power circuit unit, so that a high-power unit can be split, and each circuit assembly has a higher electric energy conversion efficiency and a more stable performance. In addition, the plurality of power circuit units may be connected in parallel to be connected to an input power supply, and output ends of all the circuit assemblies of all the power circuit units may provide combined output in a series-parallel combination manner, to output a wide range of voltages/powers. The power circuit of the present application uses less components, can effectively reduce costs, and has high stability, low energy loss, a high conversion rate, and high scalability.

FIG. 5

EP 4 723 452 A1

**Description**

TECHNICAL FIELD

The present application relates to the technical field of electric energy conversion, and in particular, to scalable power circuit technology in a high-power scenario.

BACKGROUND

In the technical field of high-power power supplies, Vienna and a totem pole are commonly used for front-stage power factor correction (PFC), and an LLC, a phase-shifted full-bridge, etc. are commonly used in a rear stage. In conventional technology, front-stage PFC is used to rectify input alternating current (AC) power and boost the AC power to fixed-voltage direct current (DC) power, with power factor correction completed during the boosting process. A rear-stage DC/DC conversion circuit is used to dynamically boost and buck the fixed-voltage DC power generated in the front stage to a voltage specified by a user of a product. Since a current in a power circuit needs to flow through the two stages of PFC and DC/DC circuits, significant energy loss occurs in components.

For example, a topology structure of a Vienna circuit includes six different switching transistors that operate in coordination. In the rear stage, two LLC circuits are connected in series-parallel, and a topology structure includes eight different switching transistors that operate in coordination. In other words, in the topology circuit, there are 14 interconnected switching transistors that need to be rigorously coordinated to ensure normal operation of the circuit, and any slight error may cause device damage. For example, during a process of implementing 30 kW, since the power is excessively high, two physical switching transistors are required to bear a corresponding power for each switching transistor in the topology circuit. To be specific, an entire 30 kW power module requires rigorous coordination of 28 switching transistors for implementing a function of the device. This further increases the complexity in controlling the device, and further reduces stability. When devices of 50 kW, 60 kW, or even more are demanded in the market, more switching transistors need to be further added to the original topology structures such as Vienna and LLC, to ensure normal operation of the device. This makes system stability unsustainable.

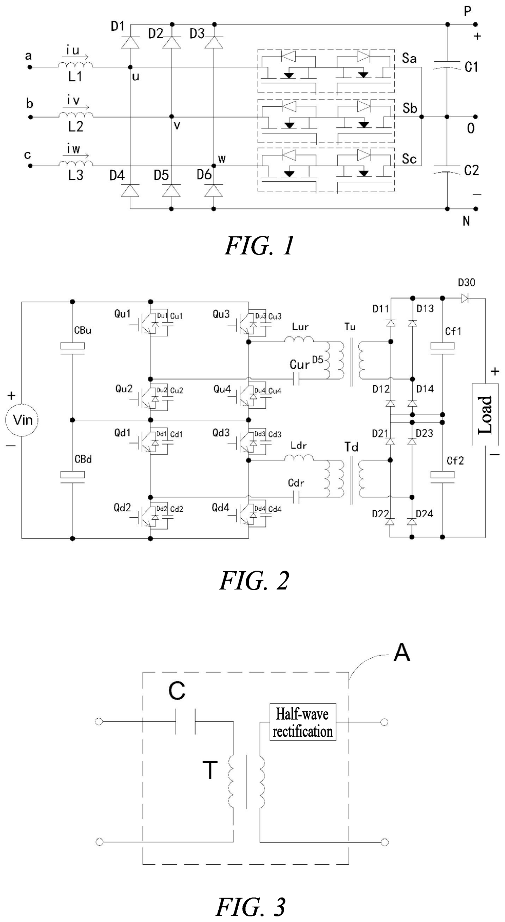

FIG. 1 is a schematic diagram of connection of a front-stage topology circuit of a power module for implementing PFC, specifically a three-phase three-wire three-level Vienna circuit, in the prior art. FIG. 2 is a schematic diagram of connection of a rear-stage DC/DC topology circuit of a power module for implementing voltage regulation/isolation of the power module, specifically two groups of interleaved series-connected two-level full-bridge LLC, in the prior art.

It can be seen that the power module in the prior art requires the front-stage circuit and the rear-stage circuit for implementing power conversion and transmission, with a large number of components and complex circuit connections. When a connected load requires a high-power or ultra-high power output, circuit connections are more complex. For example, when the power is 30 kW or more, since the current in the circuit is excessively high, the 14 switching transistors (as shown in FIG. 1 and FIG. 2, 14 switching transistors are required in total) of the topology circuit in the prior art cannot bear such an excessively high current. In view of costs, circuit stability, safety, and other aspects, 28 switching transistors (for the above reasons, the number of switching transistors is increased, for example, from 14 to 28) are required to operate synchronously to support the power of 30 kW or more. The scalability and the circuit stability are quite poor, and there are also problems of high costs, high energy loss, a low conversion rate, etc.

SUMMARY

An objective of the present application is to provide a scalable power circuit system, to solve problems of low scalability, low stability, a low electric energy conversion efficiency, etc. of a power circuit in the prior art.

The present application provides a scalable power circuit system. The system includes:

an information acquisition module configured to acquire input voltage/current information and output voltage/current information of a power circuit;

a control centre connected to the information acquisition device and configured to generate, based on the information acquired by the information acquisition device and an output requirement of a load on the power circuit, control information for controlling operating states of m switches of m power circuit units below, and simultaneously transmit the control information to the m switches; and

the power circuit including the m power circuit units, each power circuit unit including a main inductor, n circuit assemblies, and a switch connected to the control centre and configured to execute the control information sent by the control centre, where m and n each are a natural number greater than 1, and each of the circuit assemblies including a capacitor, a transformer, and an output half-wave rectifier module.

Input ends of the m power circuit units are connected in parallel to be connected to an input power supply, and output ends are connected in a series and/or parallel combination. The switches of the m power circuit units are connected to the control centre, and are configured to receive and execute the control information provided by the control centre.

Another objective of the present application is to provide a scalable power circuit system based on three-phase power. When an input power supply provides A/B/C three-phase AC power, the above power circuit is connected to each phase, where

the power circuit system further includes a phase-A control unit, a phase-B control unit and a phase-C control unit that are connected to the control centre and the information acquisition module and configured to generate first control information based on input voltage/current information of a corresponding phase of phases A/B/C of the input power supply that is acquired by the information acquisition module, and transmit the first control information to the control centre; and

the control centre adjusts the first control information based on an output requirement of a load on the entire power circuit system and current output voltage/current information of the power circuits, which are acquired by the information acquisition module, to generate second control information corresponding to each of the phases A/B/C, and transmits the second control information to a switch of the power circuit corresponding to a corresponding phase of the phases A/B/C.

Another objective of the present application is to provide a method for implementing power factor correction and dynamic boosting/bucking adjustment based on a scalable power circuit system. The method includes:

step S1: obtaining a current actual input current value, a current actual input voltage value, a current actual output voltage value, and a current actual output current value at a high frequency;

step S2: comparing an obtained current actual output power with a target output power required by a connected load;

step S3: adjusting an input current peak at a high frequency based on a result of the comparison between the current actual output power and the target output power;

step S4: determining a target input current value at a high frequency based on the input current peak and current input phase information;

step S5: comparing the current actual input current value with the target input current value, and determining duty cycle and frequency adjustment instruction information for a switch at a high frequency based on a result of the comparison; and

step S6: executing, by the switch of a power circuit, the instruction information at a high frequency to control charge and discharge time of an inductor of the power circuit, so that the current actual input current value of the power circuit approaches the target input current value as much as possible.

Another objective of the present application is to provide a control method for the above scalable power circuit system. The method includes:

step S1: acquiring an input voltage/current and an output voltage/current of the power circuit;

step S2: generating, by the control centre, control information for operating states of the switches of the power circuit units based on the information acquired in S1;

step S3: simultaneously sending the control information to the switches of all the power circuit units disposed in the power circuit; and

step S4: executing, by the switches of the power circuit units, an instruction of the control information.

Another objective of the present application is to provide a control method for the above scalable power circuit system. The method includes:

step S1: acquiring output voltage/current information of the power circuits and voltage/current information of the input power supply connected to each phase;

step S2: generating, by the control unit of each phase based on the voltage/current information of the input power supply for each phase that is acquired in step S1, first control information for controlling the switches of all the power circuit units connected to each phase, and transmitting the first control information to the control centre;

step S3: adjusting, by the control centre based on an output requirement of a load on the entire power circuit, the first control information provided by the control unit of each phase, to generate second control information; and

step S4: sending, by the control centre, the second control information to the switches of the power circuit units of the corresponding phase, to control operating states of the switches.

Compared with the prior art, the scalable power circuit system of the present application includes the information acquisition module, the control centre, and the power circuit. The power circuit includes the m power circuit units, and each power circuit unit further includes n circuit assemblies. In this way, a plurality of circuit assemblies are provided in each power circuit unit, so that a high-power unit can be split, and each circuit assembly has a higher electric energy conversion efficiency and a more stable performance. In addition, a plurality of power circuit units may be connected in parallel to be connected to the input power supply, and the control centre simultaneously sends a same piece of control information to switches of all the connected power circuit units based on voltage/current information of input and output ends that is acquired by the information acquisition module, to implement unified control. This achieves high consistency and high stability of the power circuit system. Moreover, the output ends of all the circuit assemblies of all the power circuit units may provide combined output in a series-parallel combination manner, to output a wide range of voltages/powers. Because the plurality of power circuit units are connected in parallel to be connected to the input power supply, and the output ends of all the circuit assemblies of all the power circuit units are connected in a series-parallel combination, the power circuit of the present application can provide a wider range of voltage/power outputs. Therefore, the power circuit exhibits high scalability while ensuring an electric energy conversion rate. In addition, the power circuit system of the present application uses less components, and has low energy loss and a high conversion rate. Under the same electric energy conversion rate, the present application can effectively reduce costs, and exhibits high stability.

The scalable power circuit of the present application uses one stage of circuit instead of two stages of circuits in the prior art, so that the efficiency is improved. According to the scalable power circuit disclosed in the present application, a single circuit can implement capabilities of front-stage PFC and rear-stage DC/DC conversion in the prior art, and less components are used to implement power factor correction and dynamic boosting/bucking to a voltage required by a user. According to the method for implementing power factor correction and output requirement-based boosting/bucking based on a scalable power circuit in the present application, a frequency and a duty cycle of the switch may be further adjusted by adjusting the input current peak at a high frequency, to control the charge and discharge time of the inductor, implementing power factor correction. In addition, dynamic boosting/bucking adjustment and high-frequency isolation are implemented based on an input voltage and a required output voltage of the power circuit, to meet a requirement of the load.

## BRIEF DESCRIPTION OF THE DRAWINGS

FIG. 1 is a schematic diagram of connection of a three-phase three-wire three-level Vienna circuit, a front-stage PFC topology circuit, of a power module circuit in the prior art;
FIG. 2 is a schematic diagram of connection of two groups of interleaved series-connected two-level full-bridge circuits, a rear-stage DC/DC topology circuit, of a power module circuit in the prior art;
FIG. 3 is a schematic diagram of connection of a circuit assembly in a scalable power circuit according to an embodiment of the present application;
FIG. 4 is a schematic diagram of connection of power circuit units in a scalable power circuit according to another embodiment of the present application;
FIG. 5 is a schematic diagram of connection of a scalable power circuit according to another embodiment of the present application;
FIG. 6 is a schematic diagram of connection of power circuit units in a scalable power circuit according to another embodiment of the present application;
FIG. 7 is a schematic diagram of connection of power circuit units in a scalable power circuit according to another embodiment of the present application;
FIG. 8-1 is a schematic diagram of connection for connecting a phase A of three-phase AC power to a scalable power circuit according to another embodiment of the present application;
FIG. 8-2 is a schematic diagram of connection for connecting a phase B of three-phase AC power to a scalable power circuit according to another embodiment of the present application;
FIG. 8-3 is a schematic diagram of connection for connecting a phase C of three-phase AC power to a scalable power circuit according to another embodiment of the present application; and
FIG. 9 is a flowchart of a method for implementing both power factor correction and dynamic boosting/bucking adjustment for a power circuit according to an embodiment of the present application.

## DETAILED DESCRIPTION OF EMBODIMENTS

To make a person skilled in the art better understand the technical solutions of the present application, the technical solutions in embodiments of the present application are described below clearly and completely with reference to the accompanying drawings in the embodiments of the present application. Apparently, the embodiments described are merely some rather than all of the embodiments of the present application. All other embodiments obtained by a person of ordinary skill in the art based on the embodiments of the present application without creative efforts shall fall within the scope of protection of the present application.

It should be noted that the terms "first", "second", etc. in the description, claims, and accompanying drawings of the present application are intended to distinguish between similar objects but do not necessarily describe a specific order or sequence. It should be understood that data used in this way can be interchanged where appropriate, such that the embodiments of the present application described herein can be implemented in a sequence other than those illustrated or described herein. In addition, the terms "include" and "have" and any variation thereof are intended to cover a non-exclusive inclusion, for example, a process, method, system, product, or device that includes a series of steps or units is not necessarily limited to those steps or units that are explicitly listed, but may include other steps or units not explicitly listed or inherent to such a process, method, product, or device.

The present application provides a scalable power circuit system, to solve problems of low scalability, high costs, low stability, great energy loss, low conversion rate, etc. of a power circuit in the prior art caused by the use of a large number of components and complex connections.

A power circuit in the prior art is provided with a front-stage circuit and a rear-stage circuit, where the front-stage circuit implements power factor correction, and the rear-stage circuit implements DC/DC conversion, that is, bucking/regulation. The scalable power circuit system disclosed in this embodiment includes a plurality of power circuit units, where each power circuit unit includes a main inductor, a switch, and a plurality of circuit assemblies, and each circuit assembly includes a capacitor and a transformer. A plurality of circuit assemblies are provided in each power circuit unit, so that a high-power unit can be split, and each circuit assembly has a higher electric energy conversion efficiency and a more stable performance. In addition, the plurality of power circuit units may be connected in parallel to be connected to an input power supply, and output ends of all the circuit assemblies of all the power circuit units may provide combined output in a series-parallel combination manner, to output a wide range of voltages/powers while a plurality of circuit assemblies may be included, so that an electric energy conversion rate can be improved, and a wider range of voltage/power outputs can be provided. Therefore, this power circuit exhibits high scalability while ensuring the electric energy conversion rate.

When both m and n are equal to 1, the scalable power circuit system disclosed in the present application is a basic circuit unit, where the circuit unit includes less circuit components, and can implement the capabilities of both front-stage power factor correction and rear-stage DC/DC conversion in the prior art, so that an extremely small number of components form an independent operating unit. A plurality of circuit units form an entire circuit. Switches of the plurality of circuit units do not need to operate in rigorous coordination like the prior art, which significantly improves product stability. In addition, the scalable power circuit system disclosed in the present application expands the basic circuit unit based on a power required by a load connected to the power circuit, and outputs a required total power in combination, providing quite high flexibility in expansion based on output requirements. In a scenario where the load requires a relatively low power, a relatively small number of basic circuit units may be combined, significantly reducing component costs. In a scenario where the load requires a relatively high power, the basic circuit units may be combined without limitations, such a large number of basic circuit units do not operate in rigorous coordination as required in the prior art, and the switches of the plurality of basic circuit units included are not coupled together, so that the stability in the high-power scenario is significantly improved, and higher stability and scalability than those in the prior art are achieved.

The scalable power circuit system of the present application implements electric energy conversion, that is, implements electric energy conversion at different currents, voltages, and powers, and may specifically include but is not limited to an inverter, a converter, a power converter, a frequency converter, a power charging module, etc.

FIG. 3 to FIG. 5 show a scalable power circuit system of the present application, which includes the following components.

An information acquisition module (not shown) is configured to acquire input voltage/current information and output voltage/current information of a power circuit. Specifically, the information acquisition module may acquire information about voltages, currents, etc. at an input end and an output end of the power circuit system, and is further configured to acquire information about requirements of a load of the power circuit system on a voltage, a current, etc. that are output by the power circuit system. Herein, neither the information acquired by the information acquisition module nor an acquisition form is limited, provided that requirements of this embodiment are met.

A control centre (not shown) is connected to the information acquisition device, and is configured to generate, based on the information acquired by the information acquisition device and an output requirement of the load on the power circuit, control information for controlling operating states of m switches of m power circuit units below, and simultaneously transmit the control information to the m switches. Specifically, the control information is duty cycle and frequency information of the switches. A specific method for generating the control information is not limited, provided that the technical solution of the present application can be satisfied.

The power circuit includes m power circuit units, each power circuit unit including a main inductor, n circuit assemblies, and a switch connected to the control centre and configured to execute the control information sent by the control centre, where m and n each are a natural number greater than 1, and each of the circuit assemblies including a capacitor, a transformer, and an output half-wave rectifier module.

Input ends of the m power circuit units are connected in parallel to be connected to an input power supply, and output ends are connected in a series and/or parallel combination. The switches of the m power circuit units are connected to the control centre, and are configured to receive and execute the control information provided by the control centre.

Specifically, the power circuit includes the m power circuit units and the control centre for controlling the operating states of the switches of the m power circuit units, and each power circuit unit includes a main inductor L, n circuit assemblies A1 to An, and a switch K, where m and n each are a natural number greater than 1. Each of the circuit assemblies includes a capacitor C, a transformer T, and an output half-wave rectifier module. The capacitor C and an end of a primary winding of the transformer T of the circuit assembly are connected in series. An end of a secondary winding of the transformer T is a provided electric energy output end. An end of the secondary winding corresponding to the end of the primary winding connected to the capacitor C is connected to the output half-wave rectifier module. After the capacitor and the primary winding of the transformer of each of the n circuit assemblies are connected in series, series branches are connected in parallel.

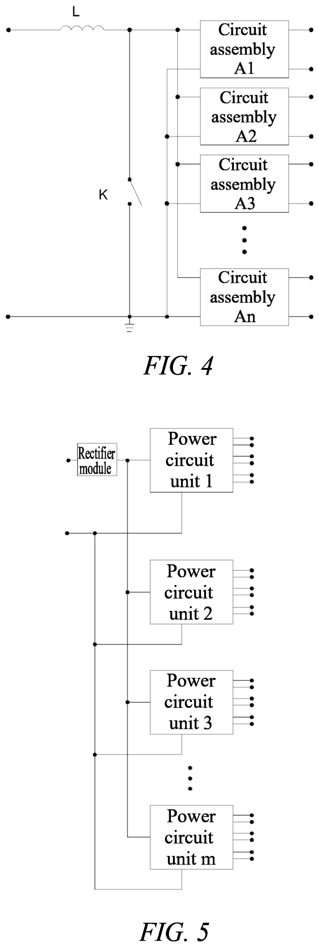

Specifically, FIG. 3 is a schematic diagram of a connection relationship between components of one circuit assembly A. The circuit assembly A includes a capacitor C, a transformer T, and an output half-wave rectifier module. FIG. 4 is a schematic diagram of a connection relationship of a power circuit unit including n circuit assemblies. The power circuit unit includes n circuit assemblies A1 to An in total, and the n circuit assemblies are connected in parallel and then connected to the inductor L, the switch K, etc. The power circuit shown in FIG. 5 includes m power circuit units, where each power circuit unit has six output ends, and each power circuit unit includes three circuit assemblies.

As shown in FIG. 4, one end of the main inductor of the power circuit unit is configured to be connected to an input power supply, and the other end of the main inductor and one end of the switch are connected to one end of the capacitor of each of the n circuit assemblies included in the power circuit unit. One end of the primary winding of the transformer of each circuit assembly is connected to the other end of the switch of the power circuit unit, and is configured to be connected to the other end of the input power supply.

As shown in FIG. 5, the m power circuit units are connected in parallel, and are configured to be connected to the input power supply. The information acquisition module (not shown) is configured to acquire the input voltage/current information and the output voltage/current information of the power circuit. The control centre is configured to generate, based on the information acquired by the information acquisition module and a requirement of the load for electric energy output by the entire power circuit system, the control information for controlling the operating states of the switches, and provide duty cycle and frequency control information to the m switches of the m power circuit units. In practice, the control centre sends the same control instruction information to the switches of the m power circuit units connected, to simultaneously control the operating states of the switches of all the power circuit units connected, and does not need to perform independent control for each power circuit unit. The above unified control of the control centre allows for consistency in operations of all the power circuit units of the entire power circuit, achieving higher consistency between the power circuit units and higher stability of the power circuit than those in the prior art.

Specifically, in this embodiment, the circuit assemblies included in the power circuit unit are scalable, and one power circuit unit may include a plurality of circuit assemblies. The power circuit units included in the power circuit are also scalable, and the power circuit may include a plurality of power circuit units. Therefore, the number of power circuit units included in the power circuit and the number of circuit assemblies included in the power circuit unit may be set based on a range of voltages or powers required by an actual load. Further, in this embodiment, a plurality of circuit assemblies may be provided in one power circuit unit, to alleviate the problem of heat dissipation of a transformer of a power circuit in which only one circuit assembly is provided. Furthermore, an output voltage/power range of the power circuit may be expanded based on the number of power circuit units arranged in the power circuit.

According to the power circuit of this embodiment, a plurality of power circuit units may be connected in parallel based on a requirement of an actual scenario, to implement a relatively wide range of voltage outputs. In addition, a plurality of circuit assemblies may be provided in each power circuit unit based on the requirement of the actual scenario, to improve a performance of the power circuit, reduce costs, achieve high scalability, and provide a wide range of voltage/power outputs.

The scalable power circuit system of this embodiment can effectively solve, but not limited to, the following technical problems.

(a) In practice, if the transformer needs to bear a relatively high power to meet the requirement of the load, although the transformer can withstand such a high power, the transformer may continuously generate heat, leading to a continuous rise in temperature. In this case, through the scalable power circuit system of the present application, one circuit assembly may be split into two circuit assemblies, that is, one transformer may be split into two small transformers, so that a power of a single transformer is halved. A heat generation point of the transformer is split into a plurality of heat generation points, so that the heat is more uniform, and can be dissipated more easily.

(b) In a scenario where the load requires a high power or an ultra-high power, a plurality of power circuit units of the present application are disposed in the power circuit, and each power circuit unit is provided with a plurality of circuit assemblies including transformers, that is, a high-power circuit is split into a plurality of circuit units. Because $P = I^2*R$, when a current that the power circuit bears is lower, copper loss generated on a primary side and a secondary side of the transformer is lower, and conduction loss generated by the switch is lower. Therefore, circuit power consumption is further reduced, and power conversion efficiency is improved.

(c) An output voltage range can be extended. In a manner of front-stage PFC and rear-stage DC/DC conversion of a conventional circuit, due to limitations of withstand voltage ranges and costs of the components, it is difficult to further extend the output voltage range of the power circuit. A further increase of the output voltage may cause a further increase of a voltage that a switching transistor inside the circuit bears, and if the switching transistor operates beyond a withstand voltage limit of the switching transistor, the device may be damaged. According to the scalable power circuit of the present application, a single operating unit includes less components, and can implement all capabilities of PFC and DC/DC conversion, so that one large power supply may be split into a plurality of small operating units for operation, and output voltages may be connected in series at output ends of the plurality of circuit units as required. This significantly extends an output voltage range of a single power supply. For example, a 40 kW power supply may be split into 40 1 kW power units, each power unit outputs a 500 V voltage, and output ends of the 40 power supplies are connected in series to implement a 20 kV output voltage. This ensures simplicity in implementation, low component costs, stability in operation, and a large output voltage range.

Preferably, with reference to FIG. 5 and as shown in FIG. 3 and FIG. 4, when the switch in a corresponding power circuit unit is in a closed state, the input power supply forms a loop with the main inductor in the power circuit unit, and charges the main inductor, and the n capacitors and primary winding inductors of the n transformers of the n circuit assemblies in the power circuit unit that are connected in series to each other form n LC resonant circuits with the switch.

When the switch in the corresponding power circuit unit is in an open state, the input power supply, the main inductor in the power circuit unit, and the n capacitors and primary windings of the n transformers of the n circuit assemblies included in the power circuit unit that are connected in series to each other form n LLC resonant circuits, and the input power supply, the charged main inductor, and the primary inductors of the charged transformers discharge to charge the n capacitors of the n circuit assemblies, to induce energy to secondary windings by changes in currents in the primary windings of the n transformers.

Specifically, the scalable power circuit of the present application forms the following loops during an operating process: a loop 1 (the input power supply + the main inductor L + the circuit assembly A1), a loop 2 (the input power supply + the main inductor L + the circuit assembly A2), a loop 3 (the input power supply + the main inductor L + the circuit assembly A3), ..., and a loop n (the input power supply + the main inductor L + the circuit assembly An); and a loop 1' (the input power supply + the main inductor L + the switch K), a loop 2' (a capacitor C1 + a primary winding inductor of a transformer T1 + the switch K), a loop 3' (a capacitor C2 + a primary winding inductor of a transformer T2 + the switch K), a loop 4' (a capacitor C3 + a primary winding inductor of a transformer T3 + the switch K), ..., and a loop (n+1)' (a capacitor Cn + a primary winding inductor of a transformer Tn + the switch K).

Further, an operating principle and an operating process of the scalable power circuit of the present application are as follows.

When the switch of the power circuit unit receives the control information from the control centre, and the switch of the power circuit unit is controlled to be in the closed state, the input power supply charges the main inductor L, and the main inductor L stores energy; in the circuit assembly A1, the capacitor C1 discharges, and a primary side of the transformer T1 stores energy; in the circuit assembly A2, C2 discharges, and a primary side of the transformer T2 stores energy; in the circuit assembly A3, C3 discharges, and a primary side of the transformer T3 stores energy; and in the circuit assembly An, C1 discharges, and a primary side of the transformer Tn stores energy. At a moment when the switch K is opened, the main inductor L generates a high voltage to avoid an abrupt change in a current across the main inductor, and transmits the electric energy through a total of n loops, that is, the loop 1, the loop 2, the loop 3, ..., and the loop n, formed with the n circuit assemblies after the switch K is opened. The main inductor L, the primary winding of the transformer T1 in the circuit assembly A1, the primary winding of the transformer T2 in the circuit assembly A2, the primary winding of the transformer T3 in the circuit assembly A3, and the primary winding of the transformer Tn in the circuit assembly An discharge to charge the capacitor C1 in the circuit assembly A1, the capacitor C2 in the circuit assembly A2, the capacitor C3 in the circuit assembly A3, and the capacitor Cn in the circuit assembly An. At this point, a voltage of the input power supply plus a voltage of the main inductor L is equal to a voltage of the capacitor plus a voltage of the primary winding inductor of the transformer in each of the circuit assemblies A1, A2, A3, and An, that is, $V_{\text{input power supply}} + V_L = V_{C1} + V_{T1 \text{ primary}} = V_{C2} + V_{T2 \text{ primary}} = V_{C3} + V_{T3 \text{ primary}} = V_{Cn} + V_{Tn \text{ primary}}$. The transformers of the n circuit assemblies induce the electric energy to the secondary windings of the transformers, and the secondary windings output the electric energy to the provided electric energy output ends by the half-wave rectifier modules, to provide the electric energy to the load.

When the switch K is switched from the open state to the closed state, the main inductor circuit unit forms a total of n+1 new loops, that is, the loop 1', the loop 2', the loop 3', the loop 4', ..., and the loop (n+1)'.

When the switch K is switched from the open state to the closed state to avoid an abrupt change in a voltage across each of the capacitor C1, the capacitor C2, the capacitor C3, ..., and the capacitor Cn, the capacitor C1 charges the primary winding of the transformer T1 in the loop 2', the capacitor C2 charges the primary winding of the transformer T2 in the loop 3', the capacitor C3 charges the primary winding of the transformer T3 in the loop 4', and the capacitor Cn charges the primary winding of the transformer Tn in the loop (n+1)'. In this case, current directions in which the capacitors in the n circuit assemblies charge the primary winding inductors of the transformers are opposite to current directions in which the main inductor L charges the capacitors C1, C2, C3, and Cn in the n circuit assemblies in the loops 1, 2, 3, and n. A half-wave rectifier module is provided in a loop of the secondary winding of the transformer in each circuit assembly, where the half-wave rectifier module forms a path only when the main inductor charges the capacitor, and the transformer induces a change in a current in the primary winding to the secondary winding of the transformer. Therefore, when the capacitor of the circuit assembly charges the primary winding of the transformer, the secondary winding of the transformer cannot form a loop due to the half-wave rectifier module connected thereto, and the transformer cannot transmit the electric energy to the secondary winding of the transformer. Equivalently, the capacitors and the primary windings of the transformers in the loops 2', 3', 4', and (n+1)' corresponding to the circuit assemblies form resonant circuits to retain the electric energy in the loops. In addition, when the switch K is in the closed state, the input power supply charges the main inductor L through the loop 1', and the main inductor L undergoes next energy storage.

Preferably, the main inductor of the power circuit unit cooperates with the switch to participate in implementing power factor correction, and further implements dynamic boosting/bucking adjustment based on an input voltage and a requirement for an output voltage of the power circuit.

Specifically, still referring to FIG. 3, the main inductor of the power circuit unit participates in implementing power factor correction, and further implements dynamic boosting/bucking adjustment based on the input voltage and the requirement for the output voltage of the power circuit unit. A principle that the main inductor in the circuit group disclosed in this embodiment cooperates with the switch to implement power factor correction is as follows.

When the input power supply provides an AC power input, a voltage period T' of the input power supply after full-wave rectification is set to a first time interval (if the input power supply provides DC power, the voltage period T' of the input power supply is directly set to the first time interval without rectification), and the input voltage continuously changes in the first time interval T'. Due to the characteristic of the main inductor that the current cannot change abruptly, which is determined by a parameter characteristic of the main inductor, a time period interval corresponding to a switching frequency of the switch K is a second time interval T". When the second time interval T" is less than the voltage period T' of the input power supply by a plurality of orders of magnitude, the switch K has been opened and closed hundreds or thousands of times in a range of the voltage period T'. In other words, for a process of controlling the operation of the power circuit unit based on the operating state of the switch K, the voltage of the input power supply does not change significantly from a local prospective, and may basically be considered constant, that is, corresponding voltages of the input power supply before and after the switch K is switched once are considered constant. In addition, when the first time interval T' includes a large number of second time intervals T", that is, the input voltage changes significantly, the main inductor L has undergone a plurality of charge and discharge processes through control of the switch K. In other words, in this case, the main inductor L has completed a plurality of cycles of the loop 1 (the input power supply + the main inductor L + the capacitor C + the transformer T), the loop 2 (the input power supply + the main inductor L + the switch K), and the loop 3 (the capacitor C + the transformer T + the switch K) during the above operating process. The main inductor L may obtain electric energy even through a relatively low voltage corresponding to the current input power supply, and smoothly transmit the current to the transformer T through the above loops, for further provision to the electric energy output end. Instead of utilizing only a peak portion of a sinusoidal voltage of the input power supply, this can effectively and smoothly transmit even the relatively low voltage of the input power supply, implementing power factor correction.

In this embodiment, the main inductor can implement power factor correction in the power circuit. This means that the inductor can fully utilize a part of low-voltage electric energy input by the input power supply, ensuring that a power factor of the power circuit unit can exceed 99%.

Further, while implementing power factor correction, the main inductor of the power circuit unit in the present application may further cooperate with the operating state of the switch K to perform dynamic boosting/bucking operations based on a specific input voltage and a specific output voltage required by the load of the power circuit. A specific boosting/bucking process and a principle are as follows.

When the voltage provided by the power circuit unit is inadequate, cannot meet the requirement of the load, and needs to be boosted, the control centre controls the switch K by increasing a duty cycle of the switch K or reducing an operating frequency of the switch K, that is, increasing charge time of the inductor L, so that when the switch is open, the inductor L may have more electric energy transmitted to the capacitor and the primary winding of the transformer of the circuit assembly and further induced to the secondary winding of the transformer, to implement boosting. Further, if the voltage provided by the power circuit unit is relatively high, and needs to be bucked, the control centre controls the switch K by reducing the duty cycle of the switch K or increasing the operating frequency of the switch, to reduce the charge time of the inductor L. In this way, electric energy transmitted by the inductor to the capacitor and the transformer in the circuit assembly is reduced, to implement bucking.

Herein, when the period interval T" corresponding to the operating frequency of the switch K is entirely greater than the voltage period T' of the input power supply, that is, T">>T', the frequency and the duty cycle of the switch K are adjusted to further adjust the charge and discharge time of the main inductor, to implement boosting/bucking. Specifically, a length of the voltage period T" of the input power supply may be set based on a specific condition of the input power supply. Further, if the input power supply provides AC power whose voltage changes periodically, for example, sinusoidal AC power, a frequency of the input power supply is 100 Hz, and correspondingly, T' = 10 ms. If the voltage of the input power supply changes with no obvious periodicity, a value of T' may be set by analogy with a change period of the sinusoidal AC power. Any specific setting manner may be used, provided that the requirements described above are met and the solution of the present application can be implemented.

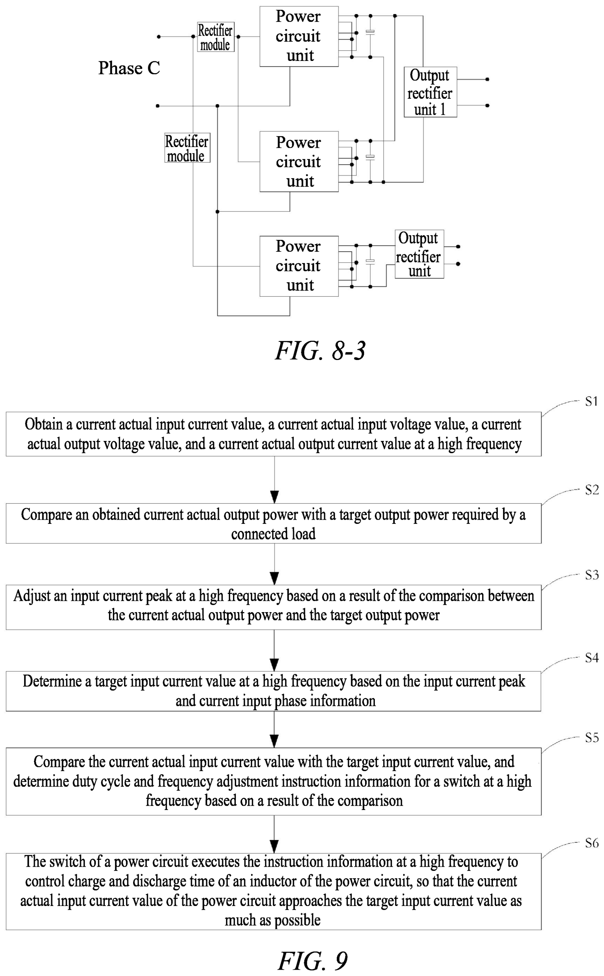

Specifically, referring to FIG. 9, the inductor cooperates with the operating state of the switch in the power circuit unit to implement power factor correction and boosting and/or busing required by the corresponding output. A specific operating process is as follows.

Step S1: Obtain a current actual input current value, a current actual input voltage value, a current actual output voltage value, and a current actual output current value at a high frequency.

Step S2: Compare an obtained current actual output power with a target output power required by a connected load.

Step S3: Adjust an input current peak (I_in_peak) at a high frequency based on a result of the comparison between the current actual output power and the target output power.

Step S4: Determine a target input current value ($I_{target\ input\ current\ value}$ = $I_{input\ current\ peak}$ * phase information) at a high frequency based on the input current peak (I_in_peak) and current input phase information (current input voltage/input voltage peak).

Step S5: Compare the current actual input current value with the target input current value, and determine duty cycle and frequency adjustment instruction information for the switch at a high frequency based on a result of the comparison.

Step S6: The switch of the power circuit executes the instruction information at a high frequency to control the charge and discharge time of the inductor in the power circuit, so that the current actual input current value of the power circuit approaches the target input current value as much as possible.

Specifically, component parameters of the circuit group need to be determined, to ensure that the power circuit unit of the present application can implement functions of boosting, bucking, power factor correction in a case of an AC input, etc. and the electric energy conversion rate of the power circuit of the present application reaches 98% or even more. Under the same electric energy conversion rate, the power circuit of the present application has lower costs and higher circuit stability than those in the prior art.

Specifically, the power circuit unit of the present application can both implement output power and voltage boosting/bucking control based on the requirement of the load and implement power factor correction in a case of a periodic fluctuating input. Compared with a circuit implementing the same functions in the prior art, the power circuit unit of the present application includes less components in a simple connection relationship, and has low costs and high stability.

Preferably, when a ratio of an input voltage maximum $V_{input}$ to an output voltage maximum $V_{output}$ of the power circuit unit is $V_{input} : V_{output}$ = 0.2 to 8, and an output power is greater than 200 W, parameters of the n capacitors of the n circuit assemblies range from 30 nF to 3 $\mu$F, inductance of the primary windings of the n transformers in the n circuit assemblies ranges from 10 $\mu$H to 1,000 $\mu$H, and ratios of the primary windings to the secondary windings of the n transformers are $R_{primary} : R_{secondary}$ = 1 : 5 to 5 : 1.

Specifically, when n = 1, the output power of the power circuit unit is greater than 200 W, and the ratio of the input voltage maximum and the output voltage maximum is 0.2 to 8.0, according to the above parameter selection rule, when the parameter of the capacitor is less than 30 nF, a voltage across the capacitor rises excessively fast during a turn-off period of the switch, causing an excessive fast rise in a voltage across the switch. This may damage the switch, or require use of a switch with a higher withstand voltage, increasing the costs of the switch. When the parameter of the capacitor is greater than 3 $\mu$F, when the switch is on, a current of the primary winding inductor of the transformer rises excessively fast, and at the moment when the switch is opened, a voltage spike brought by leakage inductance of the transformer is excessively high. This may damage the switch, or require use of a switch with a higher withstand voltage, increasing the costs of the switch. When the inductance of the primary winding of the transformer is less than 10 $\mu$H, it is relatively difficult to balance the parameters of the transformer. For example, an excessively small number of turns may lead to saturation, failing to bear an adequate power. Alternatively, even with an adequate number of turns, an excessively large air gap in a magnetic core may cause severe magnetic leakage and reduced efficiency. When the primary inductance of the transformer is greater than 1,000 $\mu$H, the energy stored in the primary inductor of the transformer during an energy storage period in which the switch is on decreases. The frequency needs to be reduced to bear an adequate power. An excessively low frequency may cause a low conversion efficiency of the transformer and susceptibility to saturation. When the ratio of the primary winding to the secondary winding of the transformer is less than 1 : 5, it is difficult to manufacture the transformer, which is prone to causing excessive leakage inductance in the secondary winding of the transformer. When the switch is on, the leakage inductance of the secondary winding induces significant oscillation in the current of the switch, leading to a significant reduction in efficiency. When the ratio of the primary winding to the secondary winding of the transformer is greater than 5 : 1, it is difficult to manufacture the transformer, which is prone to causing excessive leakage inductance in the primary winding of the transformer. At the moment the switch is opened, the leakage inductance of the primary winding induces significant voltage oscillation across the switch. This may damage the switch, or require selection of a switch with a higher withstand voltage, leading to an increase in the costs of the switch.

Specifically, when n = 1, in this embodiment, the parameter of the main inductor in the power circuit unit is further determined according to the above parameter selection rule. Since the electric energy is dynamically distributed between the main inductor and the primary winding of the transformer based on a magnitude relationship between inductance of the main inductor and inductance of the primary winding of the transformer during the operation of the power circuit unit, the parameter of the main inductor needs to have a relatively wide range, specifically 1 $\mu$H to 10 mH. When the main inductor stores more energy and participates more in energy transfer, a parameter value of the main inductor may be set relatively small, and a parameter range may be set to 1 $\mu$H to 100 $\mu$H. When the main inductor does not participate in energy transfer or participates less in energy transfer, the parameter value of the main inductor may be set relatively large, and the parameter range may be set to 2 mH to 10 mH.

Further, the following conditions further need to be considered when a specific value of the parameter of the main inductor is determined.

If the inductance of the main inductor is selected to be close to the inductance of the primary winding of the transformer, as an example rather than a limitation, both the inductance of the main inductor and the inductance of the primary winding of the transformer are designed to 10 $\mu$H to 30 $\mu$H. In this case, energy stored in the primary winding of the transformer and the main inductor during the energy storage period in which the switch is on is consistent. This has the advantage that the main inductor shares an energy transfer task, balancing heat generation points between the main inductor and the primary winding of the transformer. In addition, a requirement is imposed on a material for a magnetic core of the main inductor. The loss of a selected magnetic core during energy storage and transfer processes needs to be carefully tested to avoid inductor saturation, which may lead to an increase in inductor costs.

If the inductance of the main inductor is much greater than the inductance of the primary winding of the transformer, as an example rather than a limitation, the inductance of the main inductor is designed to 800 $\mu$H to 1,000 $\mu$H, and the inductance of the primary winding of the transformer is designed to 10 $\mu$H. In this case, the energy stored in the primary inductor of the transformer dominates during the energy storage period. This has advantages of reducing energy transfer of the inductor and reducing costs of the magnetic core of the inductor.

If the inductance of the main inductor is set much less than the inductance of the primary winding of the transformer, as an example rather than a limitation, the inductance of the main inductor is designed to 10 $\mu$H, and the inductance of the transformer is designed to 1,000 $\mu$H. In this case, the energy stored in the primary inductor of the transformer is far greater than that stored in the primary side of the transformer during the energy storage period. If both the inductance of the main inductor and the inductance of the primary winding of the transformer are set relatively large, as an example rather than a limitation, the inductance of the main inductor is designed to 100 $\mu$ to 1,000 $\mu$H, and the inductance of the transformer is designed to 100 $\mu$ to 1,000 $\mu$H. In this case, the switching frequency needs to be set to a very low range to output a power of more than 200 W. In addition, this is prone to causing saturation of the transformer and the main inductor, imposing an extremely high requirement on setting of the parameters of the transformer and the main inductor. In practice, the electric energy conversion efficiency of the power circuit unit in the solution is relatively low.

Specifically, in this embodiment, the operating frequency of the switch is related to a plurality of parameters. When parameters such as the inductance of the primary winding of the transformer, the inductance of the main inductor, the duty cycle of the switch, the input voltage, and the load remain unchanged, reducing the operating frequency of the switch can improve the output power of the power circuit unit, and increasing the operating frequency of the switch can reduce the output frequency of the power circuit unit. It should be noted that an excessively low switching frequency is prone to causing saturation of the inductor and the transformer, and an excessively high switching frequency may cause an increase of switch loss. Specifically, the switching frequency needs to be dynamically adjusted in real time based on a fluctuation of the input voltage and a dynamic requirement for the output voltage.

Further, during the process where the power circuit unit performs dynamic boosting/bucking adjustment based on the output requirement, values of the duty cycle and the frequency of the switch need to be calculated and adjusted in real time. The process where the power circuit unit implements power factor correction involves adjusting the duty cycle and the frequency of the switch to make an actual input current approach in real time a target input current that is synchronized with the input voltage and changes in accordance with the law for the input voltage. Therefore, the range of the operating frequency of the switch needs to be dynamically adjusted while meeting power factor correction. Specifically, the range is approximately 30 K to 500 K.

In summary, when n = 1, the output power of the power circuit unit is greater than 200 W, and the ratio of the input voltage maximum to the output voltage maximum is 0.2 to 8, the parameter of the capacitor is set to 30 nF to 3 $\mu$F, the

primary inductance of the transformer is set to 10 µH to 1,000 µH, the parameter of the inductor is set to range from 1 µH to 10mH, and the ratio of the primary winding to the secondary winding of the transformer is set to 1 : 5 to 5 : 1. In this case, the power circuit unit can achieve an electric energy conversion rate of 96% or more, and the electric energy conversion rate is up to 98% in some specific scenarios. For details, refer to experimental data of Embodiments 1 to 64 in Table 1. Compared with the prior art, the power circuit unit has a higher electric energy conversion rate. In addition, the power circuit unit uses only a small number of components, achieving an ultra-high energy conversion rate at low costs, and can implement dynamic boosting and bucking based on the requirement of the load. Compared with a circuit with the same electric energy conversion rate in the prior art, the power circuit unit of the present application has higher stability, lower costs, and lower electric energy loss, and is more energy-saving.

Preferably, when a ratio of an input voltage maximum to an output voltage maximum of the power circuit unit is $V_{input} : V_{output}$ = 0.2 to 1.0, and an output power is 200 W to 1,000 W, inductance of the primary windings of the n transformers in the n circuit assemblies ranges from 10 µH to 1,000 µH, ratios of the primary windings to the secondary windings of the n transformers are $R_{primary} : R_{secondary}$ = 1 : 5 to 1 : 1, and parameters of the n capacitors of the n circuit assemblies range from 100 nF to 3 µF.

Specifically, when n = 1, this embodiment provides parameter ranges of the corresponding capacitor, the primary winding of the transformer, and the ratio of the primary winding to the secondary winding of the transformer in the components of the power circuit unit when the output power of the power circuit unit is 200 W to 1,000 W and a ratio of a calculated input voltage value to a calculated output voltage value is 0.2 to 1.0. According to the above parameter determining principle and process, after a specific input voltage maximum, a specific output voltage maximum, and a specific output power are determined, the specific parameters of the corresponding components are selected and determined within the parameter ranges of the corresponding components provided in this embodiment. This implements power factor correction and dynamic boosting/bucking adjustment based on the requirement of the output end, and can achieve an electric energy conversion rate of up to 98%. For details of specific experimental data of the parameters and test results, refer to Embodiments 1 to 18 in Table 1. Compared with a circuit with the same functions and the same electric energy conversion rate in the prior art, the power circuit unit of the present application uses significantly less components that those used by the circuit in the prior art, and has lower energy loss, lower costs, and higher circuit stability.

As an example rather than a limitation, when n = 1, in a case where the input voltage maximum of the power circuit unit is 50 V, the output voltage maximum is approximately 250 V, and the output power is 200 W, according to the above parameter design principle, the inductance parameter of the main inductor is designed to approximately 10 µH to 1 mH, the inductance parameter of the primary winding of the transformer is set to approximately 10 µH to 1 mH, the parameter of the capacitor is set to approximately 500 nF to 3,000 nF, and the ratio of the primary winding to the secondary winding of the transformer is set to approximately 1 : 5 to 1 : 2. In this case, the corresponding electric energy conversion rate is 97% or more.

Specifically, when n = 1, in this embodiment, the inductance of the primary winding of the transformer is set to 10 µH, or the inductance of the main inductor is designed to approximately 10 µH. This is because in a case of a 50 V input voltage, the energy stored in the main inductor and the primary side of the transformer during each energy storage cycle is very low. Only by significantly reducing the inductance of the primary winding of the transformer or the inductance of the main inductor, the primary winding of the transformer and the main inductor can store adequate energy during the energy storage cycle, so that the power circuit supplies an adequate power to the output end or the connected load. However, if the inductance of the primary winding of the transformer or the inductance of the main inductor is further reduced, an excitation current of the transformer may be significantly increased, leading to a significant decrease in conversion efficiency.

In this embodiment, when n = 1, the inductance ratio of the primary winding to the secondary winding of the transformer ranges approximately from 1 : 5 to 1 : 2. Since the input voltage maximum is only 50 V, if a 1 : 1 transformer is used, the duty cycle for operation of the switch needs to be increased to boost the output voltage. If a 300 V output voltage is required, the duty cycle needs to be increased to be greater than approximately 70%, to obtain an output voltage of approximately 300 V. In this case, the loss during the on state of the switch decreases excessively, resulting in low conversion efficiency of the power circuit unit. Using a boosting transformer whose inductance ratio of the primary winding to the secondary winding ranges from 1 : 5 to 1 : 2 can effectively reduce the duty cycle of the switch and improve the electric energy conversion efficiency.

Since the input voltage is relatively low, the capacitor requires a relatively large capacitance to ensure that adequate energy is stored in the primary winding of the transformer during the energy storage period. If the parameter of the capacitor is set below 500 nF, when the output voltage changes dynamically, inadequate energy is stored in the capacitor at a part of power points, leading to a decrease in efficiency. If the capacitor is set at 3000 nF or more, a large voltage spike is observed when the switch is open. In this case, a switch with a better withstand voltage performance is required, which increases the costs.

In practice, when n = 1, type selection of a switch component is also related to setting of the operating frequency of the switch. For an ordinary silicon-based MOS transistor, a maximum recommended frequency is limited to 150 K. For a silicon carbide MOS transistor, a maximum recommended frequency is limited to 250 K. For an IGBT switching transistor, a maximum recommended frequency is limited to 40 K. For a gallium nitride MOS transistor, a maximum recommended frequency is limited to 500 K. The switch in this embodiment is a commercially available high-frequency switch with a withstand voltage of 150 V, for example, a high-frequency switch whose model is NCEP15T14, and a corresponding operating frequency of the switch ranges from 50 K to 200 K.

When n = 1, in a case where the input voltage maximum is 300 V, the output voltage maximum is approximately 300 V, and the output power is 1,000 W, according to the above parameter design principle, the inductance of the primary winding of the transformer is set to approximately 60 $\mu$H to 1 mH, the parameter of the capacitor is set to approximately 100 nF to 500 nF, and the ratio of the primary winding to the secondary winding of the transformer is set to approximately 1 : 1. In this case, the electric energy conversion rate of the corresponding power circuit unit is 98% or more.

Specifically, as an example rather than a limitation, when n = 1, the input is 300 V DC power, the output is AC power with a maximum value of approximately 300 V, the output power of the power circuit unit is 1,000 W, and the input voltage maximum and the output voltage maximum are approximately 1 : 1, so that the inductance of the inductor and the primary winding of the transformer should be selected to be relatively large. For example, the inductance of the primary winding of the transformer is set to 60 $\mu$H, and the inductance of the main inductor is set to 1 mH. Since the ratio of the input voltage maximum to the output voltage maximum is 1, the primary-secondary inductance of the transformer adopted is approximately 1 : 1. When the primary-secondary ratio of the transformer is close, costs can be reduced in a transformer manufacturing process, and the leakage inductance is easy to control.

In the application scenario of this embodiment, when n = 1, if a capacitor whose capacitance is less than 100 nF is selected, the capacitor may be unable to provide adequate energy to the primary winding of the transformer during the energy storage period in which the switch is closed, leading to a decrease in the conversion efficiency of the power circuit. If a capacitor whose capacitance is greater than 500 nF is selected, it is likely to cause a large charging current when the primary winding inductor of the transformer is charged during the energy storage period in which the switch is closed. At the moment when the switch is opened, a voltage spike is generated due to the primary leakage inductance of the transformer. As a result, a switch with a higher withstand voltage needs to be selected, increasing the costs.

In this embodiment, as an example rather than a limitation, when n = 1, in a case where the input voltage maximum is 300 V, the output voltage maximum is approximately 300 V, and the output power is 1,000 W, according to the above parameter design principle, the primary winding of the transformer is set to approximately 60 $\mu$H to 1 mH, the parameter of the capacitor is set to approximately 100 nF to 500 nF, and the ratio of the primary winding to the secondary winding of the transformer is set to approximately 1 : 1. In this case, the electric energy conversion rate is 98% or more.

In this embodiment, as an example rather than a limitation, this embodiment may be applied to the solar photovoltaic field. When n = 1, the input is 300 V DC power, the output is AC power whose peak is approximately 300 V, the output power of the power circuit unit is 1,000 W, and the input voltage maximum and the output voltage maximum are approximately 1 : 1, so that the inductance of the main inductor and the primary winding of the transformer should be selected to be relatively large. Smaller inductance may cause a decrease in the electric energy conversion efficiency. In practice, the inductance of the primary winding of the transformer is set to 60 $\mu$H, and the inductance of the main inductor is set to 1 mH, so that the electric energy conversion efficiency of the power circuit is up to 98% or more.

In addition, the energy during the energy storage period may be distributed between the transformer and the main inductor. If the inductance of the main inductor is increased, and the inductance of the transformer is reduced, a proportion of energy stored in the primary side of the transformer during the energy storage period in which the switch is closed is higher, and a proportion of energy stored in the main inductor is lower. If the inductance of the main inductor is reduced, and the inductance of the transformer is increased, a proportion of energy stored in the primary side of the transformer during the energy storage period in which the switch is closed is lower, and a proportion of energy stored in the main inductor is higher.

In the application scenario of this embodiment, when n = 1, the parameter of the capacitor is approximately 100 nF to 500 nF. In practice, when n = 1, if the capacitance of the capacitor is less than 100 nF, energy stored in the capacitor during the energy storage period in which the switch is closed is excessively low, and the capacitor cannot provide adequate energy to the primary winding of the transformer, leading to a decrease in the electric energy conversion efficiency of the power circuit unit. If the capacitance of the capacitor is greater than 500 nF, the capacitor stores excessive energy during the energy storage period in which the switch is closed, and is likely to cause a large charging current when charging the primary winding inductor of the transformer. At the moment when the switch is opened, a voltage spike is generated due to the primary leakage inductance of the transformer. As a result, a switch with a higher withstand voltage needs to be selected, increasing the costs.

In this embodiment, when n = 1, since the ratio of the input voltage maximum to the output voltage maximum is 1, the primary-secondary inductance of the transformer adopted is approximately 1 : 1. When the primary-secondary ratio of the transformer is close, costs can be reduced in a transformer manufacturing process, and the leakage inductance is easy to control.

Preferably, when a ratio of an input voltage maximum to an output voltage maximum of the power circuit unit is $V_{input} : V_{output}$ = 0.5 to 1.5, and an output power is 1,000 W to 2,000 W, primary inductance of the n transformers in the n circuit assemblies ranges from 30 μH to 1,000 μH, ratios of the primary windings to the secondary windings of the n transformers are $R_{primary} : R_{secondary} = 1 : 2$ to $2 : 1$, and parameters of the n capacitors of the n circuit assemblies range from 50 nF to 3 μF.

Specifically, when n = 1, this embodiment provides parameter ranges of the corresponding capacitor, the primary winding of the transformer, and the ratio of the primary winding to the secondary winding of the transformer in the components of the power circuit unit when the output power of the power circuit unit is 1,000 W to 2,000 W and a ratio of a calculated input voltage value to a calculated output voltage value is 0.5 to 1.5. According to the above parameter determining principle and process, after a specific input voltage maximum, a specific output voltage maximum, and a specific output power are determined, the specific parameters of the corresponding components are selected and determined from the parameter ranges of the corresponding components provided in this embodiment. This implements power factor correction and dynamic boosting/bucking adjustment based on the requirement of the output end, and can achieve an electric energy conversion rate of 96% or more or even 98% or more. For details of specific experimental data of the parameters and test results, refer to Embodiments 32 to 48 in Table 1. Compared with a circuit with the same functions and the same electric energy conversion rate in the prior art, the power circuit unit of the present application uses significantly less components than those used by the circuit in the prior art, and has lower energy loss, lower costs, and higher circuit stability.

As an example rather than a limitation, when n = 1, in a case where the input voltage is a 220 V sine wave, that is, the input voltage maximum is approximately 311 V, the output voltage maximum is approximately 200 V, and the output power is 2,000 W, according to the above parameter design principle, the inductance range of the primary winding of the transformer is set to approximately 30 μH to 1 mH, the parameter range of the capacitor is set to approximately 500 nF to 3000 nF, and the ratio of the primary winding to the secondary winding of the transformer is set to approximately 2 : 1. In this case, the electric energy conversion rate of the power circuit unit may be 97% or more. Compared with a circuit with the same electric energy conversion rate in the prior art, the power circuit unit of the present application uses fewer components, has lower energy loss and higher stability, and is more energy-saving.

As an example rather than a limitation, when n = 1, in a case where the input voltage is a 380 V sine wave, that is, the input voltage maximum is approximately 540 V, the output voltage maximum is approximately 1,000 V, the ratio of the input voltage maximum to the output voltage maximum is approximately 0.5, and the output power is 1,000 W, according to the above parameter design principle, the inductance of the primary winding of the transformer is set to approximately 150 μH to 1 mH, the parameter of the capacitor is set to approximately 50 nF to 500 nF, and the ratio of the primary winding to the secondary winding of the transformer is set to approximately 1 : 2. In this case, the corresponding electric energy conversion rate is 98% or more.

Specifically, when n = 1, in this embodiment, if the output voltage is 1,000 V, the output voltage is excessively high. If a 1 : 1 transformer is used, the output voltage may be induced to the primary side of the transformer and superimposed with the voltage on the capacitor, resulting in an excessively high withstand voltage of the switch, which may damage the switch. If a 1 : 2 transformer is used, when the switch is open, after the 1,000 V output voltage is induced to the primary side, the primary voltage is only 500 V. After superimposition with the voltage on the capacitor, the withstand voltage of the switch during the turn-off period is significantly reduced, a switch selection range is extended, and the costs are significantly reduced. Therefore, the ratio of the primary winding to the secondary winding of the transformer needs to be set to 1 : 2. This configuration can significantly reduce the duty cycle for operation of the switch and improve the electric energy conversion efficiency of the power circuit. In addition, inducing the 1,000 V output voltage to the primary side via the transformer whose primary-secondary ratio is 1 : 2 can significantly reduce the withstand voltage of the switch during the turn-off period, extend the switch selection range, and significantly reduce the costs.

Preferably, when a ratio of an input voltage maximum to an output voltage maximum of the power circuit unit is $V_{input} : V_{output} = 5.0$ to 8.0, and an output power is 1,000 W to 2,000 W, primary inductance of the n transformers in the n circuit assemblies ranges from 50 μH to 250 μH, ratios of the primary windings to the secondary windings of the n transformers are $R_{primary} : R_{secondary} = 2 : 1$ to $5 : 1$, and parameters of the n capacitors of the n circuit assemblies range from 200 nF to 800 nF.

In this embodiment, when n = 1, as an example rather than a limitation, in a case where the input voltage is a 220 V sine wave, that is, the input voltage maximum is approximately 311 V, the output voltage maximum is approximately 40 V, and the output power is 1,000 W, according to the above parameter design principle, the inductance of the primary winding of the transformer is set to approximately 150 μH to 250 μH, the parameter of the capacitor is set to approximately 200 nF to 500 nF, and the ratio of the primary winding to the secondary winding of the transformer is set to approximately 5 : 1. In this case, the corresponding electric energy conversion rate is 96% or more. For details of specific experimental data of the parameters and test results, refer to Embodiments 19 to 31 in Table 1. In a case of the same function and the same electric energy conversion rate as that in the prior art, it is clear that the power circuit unit of the present application uses less components than those used in the prior art, and has lower energy loss, lower costs, and higher circuit stability.

Specifically, when n = 1, in this embodiment, the output voltage is only 40 V, and the output half-wave rectifier module can use a switching device instead of a diode. In a case of a low voltage, the output current is relatively large, and a switching device with relatively low internal resistance needs to be selected.

In this example, the output voltage is only 40 V, and the switching device may be used instead of the diode for output half-wave rectification. A switching component for replacing the diode is selected.

In this embodiment, when n = 1, as an example rather than a limitation, in a case where the input voltage is a 380 V sine wave, that is, the input voltage maximum is approximately 540 V, the output voltage maximum is approximately 100 V, the ratio of the input voltage maximum to the output voltage maximum is approximately 5 : 1, and the output power is 2,000 W, according to the above parameter design principle, the inductance of the primary winding of the transformer is set to approximately 50 $\mu$H to 150 $\mu$H, the parameter of the capacitor is set to approximately 400 nF to 800 nF, and the ratio of the primary winding to the secondary winding of the transformer is set to approximately 2 : 1. In this case, the corresponding electric energy conversion rate is 97% or more. In a case of the same function and the same electric energy conversion rate as that in the prior art, the number of components of the power circuit unit of the present application is far less than that of a product of a same type on the market, the costs are far lower than the costs of the product on the market, and the circuit stability is higher.

In this embodiment, the input voltage of the power circuit unit is relatively high, the output voltage is relatively low, and the output current is relatively large. In practice, when n = 1, using a 1 : 1 transformer may result in an excessively small duty cycle and an excessively low frequency of the switch, leading to low conversion efficiency of the transformer and consequently a decrease in the overall electric energy conversion efficiency of the power circuit unit. Using a transformer whose primary-secondary ratio is approximately 2 : 1 to 3 : 1 can well solve this problem and improve the conversion efficiency of the circuit. It should be noted that the primary leakage inductance of the transformer whose primary-secondary ratio is 2 : 1 to 3 : 1 may increase. If the primary leakage inductance is excessively large, a voltage spike may be generated at the moment when the switch is opened. This may damage the switch, or require use of a switch with a higher withstand voltage, increasing the costs. It is recommended herein to use a copper foil as a primary/secondary winding and use a process of winding the primary winding and the secondary winding in parallel to manufacture the transformer, to reduce the primary and secondary leakage inductance of the transformer.

In this embodiment, the output voltage is only 100 V, and it is recommended to use the switching component instead of the diode for output half-wave rectification. In addition, consideration may be given to configuring the switch of the power circuit unit as a switch assembly formed by connecting a plurality of switching devices in parallel, to reduce the conduction loss.

Preferably, when a ratio of an input voltage maximum to an output voltage maximum of the power circuit unit is $V_{input} : V_{output}$ = 2.0 to 5.0, and an output power is 2,000 W to 10,000 W, primary inductance of the n transformers in the n circuit assemblies ranges from 50 $\mu$H to 250 $\mu$H, ratios of the primary windings to the secondary windings of the n transformers are $R_{primary} : R_{secondary}$ = 1 : 1 to 2 : 1, and parameters of the n capacitors of the n circuit assemblies range from 200 nF to 800 nF.

In this embodiment, when n = 1, as an example rather than a limitation, in a case where the input voltage is 600 V to 1,000 V, the output voltage is 220 V to 380 V, and the output power is 2,000 W to 10,000 W, according to the above parameter design principle, the inductance of the primary winding of the transformer is set to approximately 50 $\mu$H to 250 $\mu$H, the parameter of the capacitor is set to approximately 100 nF to 800 nF, and the ratio of the primary winding to the secondary winding of the transformer is set to approximately 1 : 1 to 2 : 1. In this case, the corresponding electric energy conversion rate is 96% or more. For details of specific experimental data of the parameters and test results, refer to Embodiments 49 to 59 in Table 1. If the inductance of the primary winding of the transformer is less than 50 $\mu$H, the frequency of the switching transistor is excessively high, switching transistors such as an IGBT cannot be used, and the costs are further increased. If the inductance is higher than 250 $\mu$H, the entire circuit may be unable to output an adequate power, or the switch needs to operate at an extremely low frequency, reducing the conversion efficiency of the transformer. In a case of the same power and the same efficiency as that in the prior art, the number of components of the power circuit unit of the present application is far less than that of a circuit in the prior art, and the costs are far lower than the costs of the product in the prior art.

According to the scalable power circuit of the present application, one power circuit unit includes one main inductor and n circuit assemblies. Setting n can make the power circuit unit scalable and applicable to more scenarios and provide a wider range of output voltages. In addition, the power circuit unit has a higher electric energy conversion rate than that when n = 1. For details, refer to experimental data corresponding to Embodiments 1 to 4 in Table 2. A determining manner of n is as follows.

When a value of n is smaller, the number of transformers is smaller, and a power that a single transformer needs to bear is higher. In this case, through appropriate selection, the number of transformers is relatively small, and the costs are relatively low. It should be noted that an excessively large current in the primary winding of the transformer may cause heating of the transformer, difficulty in heat dissipation of the transformer, and a decrease in the electric energy conversion efficiency. In practice, if cases such as low conversion efficiency or transformer heating occur, consideration may be given to increasing the value of n.

When a value of n is larger, the number of transformers is larger, and a power that a single transformer needs to bear is lower. In this case, through a proper configuration, heat generated by the transformer is distributed to a plurality of points, and the primary current of a single transformer is relatively small, so that the electric energy conversion efficiency is improved. In addition, the plurality of transformers may be flexibly connected in series and parallel, extending the output voltage range of the entire power circuit.

However, it should be noted that an increase in the value of n leads to an increase in the number of transformers, which may result in higher costs and a larger size of the overall product. Considering manufacturing process problems of the transformer, there may be differences between the inductance of the primary windings of the plurality of transformers in the plurality of circuit assemblies. These differences may cause a failure of equal current sharing of the primary currents of the plurality of transformers in practice. At the moment when the switch of the power circuit unit is opened, the plurality of capacitors in the plurality of circuit assembles may be charged and discharged by each other, resulting in an unstable current of the switch.

In practice, it is recommended that n < 12. During an experiment, when n = 12, that is, there is one inductor and 12 transformers, it can be observed that primary currents of the transformers continuously change in an operating period. The current of the switch fluctuates, the stability of the entire circuit is relatively poor, and the switch may be damaged, with the performance of the switch not ensured. Nevertheless, the electric energy conversion rate can still reach 97.19%. For details, refer to Embodiment 4 in Table 2.

In practice, when it is difficult to deal with the heat generated by the transformer, for example, winding heating and magnetic core heating arise in a high-power scenario, logic of sharing the main inductor of the present application may be used, and a high-power transformer is split into two or more transformers to distribute heat.

In a specific embodiment, the input voltage of the power circuit unit is AC 380 V, the output voltage is DC 300 V, and the power is 4,000 W. In this case, the parameter of the main inductor is 800 $\mu$H, the inductance of the primary winding of the transformer is 50 $\mu$H, the magnetic core of the transformer is an EE55 magnetic core, and the capacitance of the capacitor is 300 nF. During an actual operating process, a 20 W fan is used to blow directly on the transformer at full power. After 10 minutes of full-load operation, a winding temperature of the transformer rises to 150 degrees Celsius.

With the scalable power circuit of the present application, when the input voltage of the power circuit unit of the scalable power circuit is AC 380 V, the output voltage is DC 300 V, and the power is 4,000 W, the parameter of the main inductor is 800 $\mu$H. One inductor with two circuit assemblies is provided. The two transformers use EE51 magnetic cores, inductance of primary windings of the two transformers is 100 $\mu$H, and capacitance of two capacitors is 200 nF. The 20 W fan is used to blow directly on the transformers at full power. After 10 minutes of full-load operation, winding temperatures of the transformers only rise to 73 degrees Celsius. It can be seen that the technology of sharing the main inductor disclosed in the present application can well solve the problem of difficulty in heat dissipation of the transformer.

In practice, when the output voltage is much higher than the input voltage, resulting in a low electric energy conversion efficiency or the voltage withstand of the switch exceeding an upper limit, the power circuit unit of the present application may be adopted: the transformer is split into a plurality of transformers, and output ends of the transformers are connected in series, to effectively solve this problem.

In a specific embodiment, when the input voltage is AC 380 V, the output voltage is DC 1,000 V, and the power is 2,000 W, the parameter of the main inductor is set to 0.8 mH, the inductance of the primary winding of the transformer is set to 70 $\mu$H, and the capacitance of the capacitor is set to 200 nF. In this case, during the turn-off period of the switch in the power circuit unit, the voltage may rise to 1500 V or more, and a switch with a relatively high withstand voltage needs to be selected. In addition, due to excessive voltage boosting, the duty cycle is excessively large, generally exceeding 65% within the operating period. As a result, the electric energy conversion efficiency is 94.3%.

With the scalable power circuit of the present application, when the input voltage of the power circuit unit is AC 380 V, the output voltage is DC 1,000 V, and the power is 2,000 W, the parameter of the main inductor is set to 0.8 mH. One main inductor with two circuit assemblies is provided. Primary inductance of each of two transformers is set to 150 $\mu$H, and capacitance of each of two capacitors is 200 nF. Each transformer is set to output 500 V. After output ends of diodes on secondary sides of the transformers are connected in series, the power circuit unit can provide an output voltage of 1,000 V with efficiency of 97.4%.

According to the scalable power circuit system of the present application, the m power circuit units are provided, and each power circuit unit is provided with n assemblies, so that scalability of the power circuit is achieved. Specifically, for experimental data of the scalable power circuit system, refer to experimental data in Embodiments 1 to 5 in Table 3. A process of selecting and determining m and n is as follows.

Increasing the value of m may increase the power of the entire scalable power circuit when each power circuit unit remains unchanged, and may reduce the power of each power circuit unit when the total power of the power circuit remains unchanged, making each circuit unit more stable and efficient.

Specifically, when the output power of each power circuit unit is 3 kW, the output power of the entire circuit product is 9 kW when m = 3. If an 18 kW product needs to be designed with the same parameters of each power circuit unit, it is only needed to simply set m to 6.

Specifically, the switch of each power circuit unit may be a switch assembly formed by connecting no more than five switches in parallel. In practice, if the number of parallel-connected switches of the switch assembly is greater than 5, there may be an equal current sharing problem in switch control: currents flowing through a plurality of parallel-connected switches of the switch assembly are inconsistent. This results in a switch waste or switch damage caused by an excessively large current in an individual switch of the switch assembly due to the equal current sharing problem during full-power operation. Therefore, when charging currents of a transformer and a main inductor of one power circuit unit are excessively large, and more than five switches need to be connected in parallel, it is recommended to increase the value of m, to reduce the number of parallel-connected switches of a switch assembly of a single power circuit unit.

Specifically, each power circuit unit includes n circuit assemblies. When the value of n is excessively large (in practice, recommended to be less than or equal to 12), a plurality of circuit assemblies included in one power circuit unit may be in poor consistency. This causes inconsistency between voltages on capacitors of the plurality of circuit assemblies at the moment when the switch is opened, resulting in mutual charging and discharging between the capacitors, which is prone to damaging the device. In this case, it is recommended to increase the value of m and reduce the value of n.

Specifically, in a specific embodiment, the input voltage is 380 V, the output voltage is 488 V, and the output power is 1.65 kW. The power circuit of the scalable power circuit system is set to include one power circuit unit and one circuit assembly, that is, include one main inductor, one switch, one capacitor, one transformer, etc. In this case, a parameter of the main inductor is set to approximately 0.8 mH, a frequency of the switch is set to range from 60 K to 170 K, a parameter of the capacitor is set to approximately 220 nF, and an inductance parameter of a primary winding of the transformer is set to approximately 110 $\mu$H. In this case, a corresponding electric energy conversion rate is 97.4% to 97.7%.

It can be seen from the above embodiment that if expansion is not performed, although a relatively high energy conversion efficiency is maintained, the output power of the entire power circuit system is relatively low, and the output voltage range is relatively narrow. After expansion of the power circuit units and the circuit assemblies, the output power of the circuit product can be significantly increased, and the output voltage range can be significantly extended.

Specifically, in a specific embodiment, the input voltage is 380 V, the output voltage is 1,000 V, and the output power is 40 kW. The scalable power circuit system is set to include six power circuit units, and each power circuit unit includes four circuit assemblies, that is, 12 main inductors, 24 capacitors, 24 transformers, etc. are included. In this case, a parameter of the main inductor is set to approximately 0.8 mH, a frequency of the switch is set to range from 60 K to 170 K, a parameter of the capacitor is set to approximately 220 nF, and an inductance parameter of a primary winding of the transformer is set to approximately 110 $\mu$H. The 24 transformers are grouped into two groups, where the transformers in each group are connected in parallel, and the two groups are connected in series. In this case, a corresponding electric energy conversion rate is 97.1%.

It can be seen from the above embodiment that a 1.65 kW power circuit unit may be expanded into a 40 kW circuit product, and the output voltage range is extended from 480 V to 1,000 V. During this process, a very high electric energy conversion efficiency is maintained. It can be seen that the scalable power circuit system of the present application can implement power circuit expansion by setting the number of power circuit units and the number of circuit assemblies in combination, to satisfy more application scenarios.

Another objective of the present application is to provide a scalable power circuit system based on three-phase power. When an input power supply provides A/B/C three-phase AC power, the above power circuit is connected to each phase, where

the power circuit system further includes a phase-A control unit, a phase-B control unit and a phase-C control unit that are connected to the control centre and the information acquisition module and configured to generate first control information based on input voltage/current information of a corresponding phase of phases A/B/C of the input power supply that is acquired by the information acquisition module, and transmit the first control information to the control centre; and

the control centre adjusts the first control information based on an output requirement of a load on the entire power circuit system and current output voltage/current information of the power circuits, which are acquired by the information acquisition module, to generate second control information corresponding to each of the phases A/B/C, and transmits the second control information to a switch of the power circuit corresponding to a corresponding phase of the phases A/B/C.

Specifically, this embodiment describes the scalable power circuit system connected to the three-phase power. The three-phase power includes three phases: the phase A, the phase B, and the phase C. The power circuit is connected to each phase. The connected power circuit includes m power circuit units, and each power circuit unit includes n circuit assemblies. The power circuit system further includes a control unit corresponding to each phase. The control unit is connected to the information acquisition module and the control centre, and is configured to generate first control information based on input phase information of each phase of the input power supply that is acquired by the information acquisition module, and transmit the first control information to the control centre. The information acquisition module herein may be a sensor, a monitor, etc. A specific implementation form and components are not limited, provided that voltage/current information of each phase of input of the power circuit and output voltage/current information of the entire power circuit can be obtained in this embodiment. A specific method for generating the first control information herein is not limited. The control centre receives the first control information that is sent by the control unit and that carries the phase information of the corresponding phase, generates second control information based on the output voltage/current information of the current power circuit that is acquired by the information acquisition module and requirements of the load for the output voltage/current, etc. of the entire power circuit, and transmits the second control information to switches of all power circuit units connected to the corresponding phase, to control operating states of the switches. Specifically, the second control information generated by the control centre is specifically duty cycle and frequency information of the switches. A specific method for generating the second control information is not limited, provided that the technical method of the present application can be implemented.

The power circuit system of this embodiment can achieve scalability for connection to the three-phase power, extending ranges of the output voltage and the output power. In addition, since the switches of all the power circuit units connected to the three-phase power are directly controlled by the control centre, the power circuit system of this embodiment exhibits high consistency and stability.

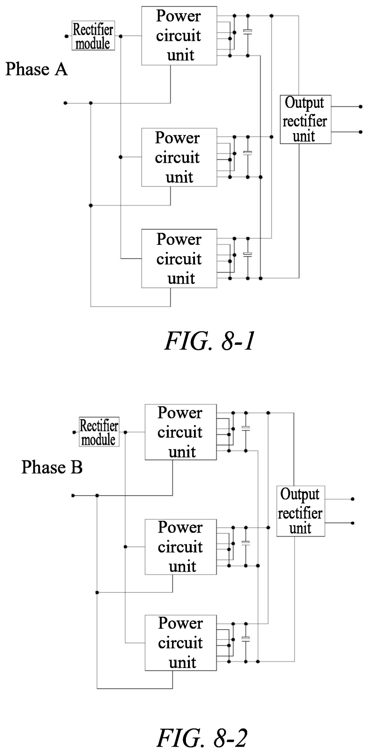

Specifically, FIG. 8-1, FIG. 8-2 and FIG. 8-3 show power circuits including three power circuit units respectively connected to the phase A, the phase B, and the phase C. Switches of the three power circuit units connected to the three phases A/B/C are each directly controlled by the control centre, that is, the operating states of the switches of the power circuit units connected to the phases are consistent.

In conventional power circuit technology, a front-stage PFC circuit is used. For three-phase power used as an input power supply, the front stage is a Vienna circuit. Alternatively, for a 220 V mains input, the front stage is a boost circuit or an interleaved boost circuit. This circuit implements AC-DC power conversion, also implements power factor correction, and outputs DC power ranging from 800V to 1,000V.

In a rear-stage DC/DC circuit of the conventional technology, the DC power ranging from 800 V to 1,000 V output by the front stage is usually used as an input to the rear stage. The rear-stage circuit is typically an LLC circuit or a phase-shifted full-bridge circuit. After high-frequency boosting/bucking and isolation by a high-frequency transformer, the circuit outputs a voltage required by a user through output rectification. This circuit implements boosting, bucking, and isolation, and finally outputs input-output isolated DC power whose voltage is dynamically specified by the user.

By means of the front-stage PFC and rear-stage DC/DC conversion, the conventional technology implements: (1) rectification - AC-DC power conversion; (2) power factor correction - the input current follows the sinusoidal fluctuation of the input voltage; (3) dynamic boosting - the output DC voltage is higher than the input voltage; (4) dynamic bucking - the output DC voltage is lower than the input voltage; and (5) high-frequency isolation - energy is transmitted at a high frequency via the transformer inside the LLC, to implement isolation between the input and the output. However, the PFC and DC/DC conversion manner in the conventional technology involves a large number of topology circuit components, resulting in poor scalability. For example, a 30 kW product implemented using the conventional technology is a combination of a 30 kW PFC circuit and a 30 kW DC/DC circuit. If the product needs to be expanded into a 40 kW product, the entire circuit needs to be redesigned to implement a combination of a 40 kW PFC circuit and a 40 kW DC/DC circuit. Specifically, the redesign required includes but is not limited to the following steps. (1) Select appropriate switching transistors to bear a higher power. (2) Connect in parallel more switching transistors to bear a higher power. (3) Redesign the inductor to bear a higher power. (4) Redesign the transformer to bear a higher power. In other words, the entire power circuit needs to be redesigned to meet a power output requirement of the load. In addition, during this process, the overall performance of the power circuit may degrade because the components bear higher powers.

It can be seen that the conventional technology has poor scalability, and there are many difficulties during the evolution of a power product toward a high power. For example, a 60 kW product requires a combination of a 60 kW PFC circuit and a rear-stage 60 kW DC/DC circuit. Circuit complexity that needs to be considered, reduction in stability caused by parallel connection of the components, and heat dissipation problems caused by a continuous increase in the power that the transformer bears lead to an exponential increase in implementation difficulty. For example, according to public data, Infineon's product REG1K0100A2 has a rated power of 30 kW and a full-load efficiency of 95.5%, and Infineon's product REG1K0135 has a rated power of 40 kW and a full-load efficiency of 95%.

Through a combination of the power circuit units and the circuit assemblies, the scalable power circuit system disclosed in the present application may implement: (1) rectification - AC-DC power conversion; (2) power factor correction - the input current follows the sinusoidal fluctuation of the input voltage; (3) dynamic boosting - the output DC voltage is higher than the input voltage; (4) dynamic bucking - the output DC voltage is lower than the input voltage; and (5) high-frequency isolation - energy is transmitted at a high frequency via the transformer inside the LLC, to implement isolation between the input and the output.

Preferably, when the input power supply provides three-phase AC power, circuit assemblies connected to the phases and numbers of circuit assemblies are consistent.

Specifically, in this embodiment, total numbers of circuit assemblies included in the power circuit unit connected to each phase of the three-phase AC power, corresponding parameters, etc. should remain consistent, to ensure stability and reliability of the power circuit. Further, each phase may include a different number of power circuit units, but a total number of circuit assemblies included in all the power circuit units should be consistent. For example, the phase A of the three-phase power may include three power circuit units, and each power circuit unit includes four circuit assembly; and the phase B may include four power circuit units, and each power circuit includes three circuit assemblies. In this case, a total number of circuit assemblies connected to each of the phase A and the phase B is 12, satisfying consistency between numbers of circuit assemblies connected to the phases. This ensures stability and output consistency of the power circuit.

Preferably, when the input power supply provides three-phase AC power, power circuit units connected to the phases and numbers of power circuit units are consistent.

Specifically, to ensure operating stability of the circuit, numbers of power circuit units connected to the phases of the three-phase power, circuit assemblies included in the power circuit units, etc. need to be consistent, to ensure the overall stability and better scalability of the power circuit.

Preferably, when the input power supply provides AC power, the power circuit further includes an input rectifier module configured to rectify the AC power into DC power. A plurality of power circuit units in the m power circuit units included in the scalable power circuit share one input rectifier module.

Specifically, when the input power supply provides AC power, the AC power of the input power supply needs to be rectified, and the DC power obtained through rectification flows into the main inductor of the power circuit unit. In practice, an AC voltage may be 220 V or another value. Depending on a difference of a single-phase or three-phase connection method, a value of a provided AC voltage may be changed. For example, the three-phase power is 380 V. To adapt to a practical AC power operating environment, the power circuit of the present application needs to perform rectification via the input rectifier module. A specific implementation manner of the rectifier module is not limited. Any solution in which rectification can be implemented in any conventional or future technology shall fall within the scope of protection of the present application, provided that the solution can be directly applied to the power circuit unit in this embodiment or can be applied to the power circuit unit in this embodiment after adaptive modifications made by a person skilled in the art on the solution without creative efforts.

Specifically, when the input rectifier module uses full-wave rectification, the sinusoidal AC power is rectified into pulsating DC power, and a frequency of the pulsating DC power obtained through rectification is doubled. A specific circuit for implementing full-wave rectification is not limited. Any solution in which full-wave rectification can be implemented in any conventional or future technology shall fall within the scope of protection of the present application, provided that the solution can be directly applied to full-wave rectification performed by the rectifier module for the input power supply in this embodiment when the input power supply provides the AC power or can be applied to this embodiment after adaptive modifications made by a person skilled in the art on the solution without creative efforts, for example, a full-bridge rectifier circuit.

Specifically, the input rectifier module may alternatively be a half-wave rectifier circuit. The sinusoidal AC power is rectified into intermittent pulsating DC power, and a frequency of the pulsating DC power obtained through rectification remains unchanged. A specific circuit for implementing half-wave rectification is not limited. Any solution of a circuit that can implement half-wave rectification in any conventional or future technology shall fall within the scope of protection of the present application, provided that the solution can be directly applied to half-wave rectification performed by the rectifier module for the input power supply in this embodiment when the input power supply provides the AC power or can be applied to this embodiment after adaptive modifications made by a person skilled in the art on the solution without creative efforts, for example, a diode/MOS transistor with a unidirectional conduction function, and a switching transistor controlled to be conducted unidirectionally.

Specifically, FIG. 8-1 and FIG. 8-2 show a case where the three power circuit units connected to each of the phase A and the phase B of the three-phase power share one input rectifier module. Referring to FIG. 8-3, two of the three power circuit units included in the phase C of the three-phase AC power share one input rectifier module, to reduce the costs, reduce the energy consumption, and improve the electric energy conversion rate.

Further, a specific circuit for implementing full-wave rectification is not limited. Any solution in which full-wave rectification can be implemented in any conventional technology shall fall within the scope of protection of the present application, provided that the solution can be directly applied to full-wave rectification performed by the rectifier module for the input power supply in this embodiment when the input power supply provides the AC power or can be applied to this embodiment after adaptive modifications made by a person skilled in the art on the solution without creative efforts.

Similarly, preferably, when the input power supply provides AC power, the power circuit further includes an input rectifier module configured to rectify AC into DC. Correspondingly, when a plurality of power circuit units are connected to each phase of the three-phase power, output ends of the plurality of power circuit units share one output rectifier unit.

Specifically, this embodiment is mainly for a scenario where the power circuit, used as an inverter, needs to output AC power. Since a current output from an output end of the power circuit is DC, the DC output from the output end of the power circuit needs to be rectified by the output rectification unit based on a requirement of a final load, to meet the requirement of the load. Further, a specific rectifier unit implementation manner of the output rectifier unit is not limited. Any solution in which rectification can be implemented in any conventional or future technology shall fall within the scope of protection of the present application, provided that the solution can be directly applied to the power circuit unit in this embodiment or can be applied to the power circuit unit in this embodiment after adaptive modifications made by a person skilled in the art on the solution without creative efforts.

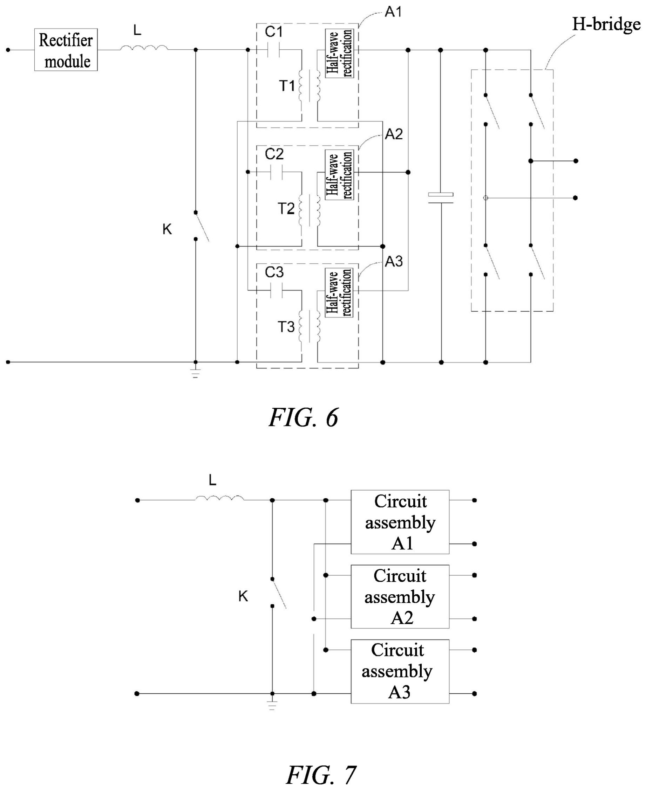

The output rectifier unit is an H-bridge. Referring to FIG. 6, the output end of the power circuit outputs DC power, and the DC power enters the H-bridge for rectification into AC power, to meet the requirement of the load of the power circuit. A component forming the H-bridge in FIG. 6 is an ordinary switch. This is merely an example rather than a limitation. A switching device in the H-bridge is not limited, provided that the switching device can implement a switching function.

Specifically, FIG. 8-1 and FIG. 8-2 show a case where the three power circuit units connected to each of the phase A and the phase B of the three-phase power share one output rectifier unit. Referring to FIG. 8-3, two of the three power circuit units included in the phase C of the three-phase AC power share one output rectifier unit, to reduce the costs, reduce the energy consumption, and improve the electric energy conversion rate.

Preferably, when the input power supply provides single-phase AC power, the output ends of a plurality of power circuit units in the m (m is greater than or equal to 2) power circuit units included in the scalable power circuit share one output rectifier unit.

Preferably, when a plurality of power circuit units are connected to each phase of the three-phase AC power, the plurality of power circuit units are connected in parallel to be connected to the input power supply.

Specifically, referring to FIG. 6 and FIG. 8-1 to FIG. 8-3, three power circuit units are connected to each phase of the three-phase power connected to the power circuit. Each power circuit unit includes a main inductor L, three circuit assemblies A1 to A3, and a switch K. One end of the main inductor of each of the three power circuit units is connected to one end of one phase of the three-phase power of the input power supply. One end of the switch K and one end of a primary winding of a transformer of each of the three circuit assemblies are connected to the other end of the phase of the input power supply.

Preferably, the output ends of the circuit assemblies included in all the power circuit units connected to the three-phase AC power supply are connected in a series or parallel combination, to form a provided electric energy output end of the power circuit.

In this embodiment, provided electric energy output ends of the plurality of power circuit units of the power circuit connected to the phases of the three-phase power and the circuit assemblies included in the power circuit units can be connected in series or parallel, to provide a wider output voltage/power range to meet different voltage requirements of various loads.

In practice, when the power circuit includes a plurality of power circuit units, and each power circuit unit includes a plurality of circuit assemblies, the provided electric energy output ends of the circuit assemblies may be connected in series, in parallel, or in a series-parallel combination through various switching control devices/modules. Herein, a specific control device/module for implementing the series/parallel combination of the output ends of the plurality of power assemblies is not limited. Any solution of a switching control device/module that can implement the series/parallel combination of the output ends of the plurality of circuit assemblies in any conventional or future technology shall fall within the scope of protection of the present application, provided that the solution can be directly applied to the series/parallel combination of the output ends of the plurality of circuit assemblies in this embodiment or can be applied to the series/parallel combination of the output ends of the plurality of circuit assemblies in this embodiment after adaptive modifications made by a person skilled in the art on the solution without creative efforts, for example, a relay and an electromagnetic switch.

Preferably, the half-wave rectifier module in the circuit assembly implements half-wave rectification by a diode.

Specifically, the half-wave rectifier module provided in this embodiment is connected to one end of the secondary winding of the transformer. A specific working principle of the half-wave rectifier module is as follows: After the switch of the power circuit unit is switched from a closed state to an open state, the main inductor that is fully charged when the switch is closed charges the capacitor of the corresponding circuit assembly. The secondary winding of the transformer acquires electric energy from the current in the primary winding by induction. In this case, the current in the secondary winding of the transformer is output to the electrolytic capacitor or the load by the half-wave rectifier module for electric energy provision or energy storage. When the switch of the power circuit unit is switched from the open state to the closed state, the capacitor in the circuit assembly forms a loop with the primary winding of the transformer and the switch. Since the capacitor does not allow an abrupt voltage change, the capacitor and the primary winding of the transformer form resonance at this point. In addition, a current direction in the primary winding of the transformer is opposite to a discharge direction of the main inductor. Due to the provision of the half-wave rectifier module at the secondary winding of the transformer, no loop can be formed, and no induced current is generated in the secondary winding when the primary winding of the transformer, the capacitor, and the closed switch form a resonant circuit.

It can be learned that a specific circuit or component for implementing half-wave rectification is not limited, provided that the half-wave rectifier module can implement unidirectional conduction of the current in the secondary winding of the transformer. Any solution of a circuit that can implement half-wave rectification in any conventional or future technology shall fall within the scope of protection of the present application, provided that the solution can be directly applied to unidirectional conduction of the current in the secondary winding of the transformer in this embodiment or can be applied to unidirectional conduction of the current in the secondary winding of the transformer in this embodiment after adaptive modifications made by a person skilled in the art on the solution without creative efforts, for example, a diode/MOS transistor with a unidirectional conduction function, and a switching transistor controlled to be conducted unidirectionally.

Further, the diode is used as the half-wave rectifier module, and the diode is connected to the corresponding output end of the secondary winding of the corresponding transformer to implement unidirectional output of the secondary winding of the transformer. The diode has an attribute of unidirectional conduction, and implementing half-wave rectification by the diode ensures a simple control circuit and a stable performance.

Preferably, the half-wave rectifier module implements half-wave rectification by a first switch and a first controller that controls the first switching transistor. Specifically, the first controller controls an operating mode of the first switch based on control of the control centre of the power circuit over operating modes of the switches of the power circuit units.

Specifically, this embodiment describes implementation of half-wave rectification on the output of the secondary winding of the transformer by the switch. In this case, the switch is controlled by a switch controller.

Further, the operating state of the switch determines whether the secondary winding of the transformer can form a loop. To be specific, when the switch is open, no loop can be formed; and when the switch is closed, a loop can be formed. In addition, after the switch of the power circuit unit is closed, when the capacitor of the circuit assembly charges the primary winding of the transformer, and forms resonance with the primary winding of the transformer, the secondary winding of the transformer cannot form a loop. In other words, in this case, the first switch needs to be opened. The first controller for the first switch needs to control the operating state of the first switch based on the operating state of the switch in the power circuit unit. Based on the above analysis, when the switch of the power circuit unit is in the closed state, the first controller needs to control the first switch to be in the open state. In this embodiment, the first controller and the corresponding first switch are provided to implement a half-wave rectification function for the output of the secondary winding of the transformer. Compared with the diode, the switch has lower energy loss and a higher electric energy conversion rate. However, due to a specific withstand voltage limit of the switch, this embodiment is mainly applied to a low-voltage scenario, for example, a scenario below 160 V.

Preferably, the switch of the power circuit unit is implemented by a bidirectional switch or a controllable switching device.

Specifically, the switch of the power circuit unit undertakes a circuit connection or disconnection function based on the control information from the control centre. Herein, a specific manner in which the control centre controls the switch is not limited, that is, a manner, means, etc. through which the control centre provides a control signal to the switch is not limited, which may be wireless or wired. Any solution in which control signal transmission from the controller to the switch can be implemented in any conventional or future technology shall fall within the scope of protection of the present application, provided that the solution can be directly applied to control signal transmission from the controller to the switch controlled by the controller in this embodiment or can be applied to this embodiment after adaptive modifications made by a person skilled in the art on the solution without creative efforts.

Further, a specific form of the switch, the controller, or the switch and the controller of the switch for implementing circuit connection and disconnection in the power circuit unit is also not limited. Any solution of a switch, a controller, or a switch and a controller of the switch that can implement circuit connection and disconnection in any conventional or future technology shall fall within the scope of protection of the present application, provided that the solution can be directly applied to a function of circuit connection and disconnection in the power circuit unit in this embodiment or can be applied to this embodiment after adaptive modifications made by a person skilled in the art on the solution without creative efforts.

Preferably, the switch of the power circuit unit included in the power circuit is a switch assembly, and the switch assembly includes a plurality of switches that are connected in parallel.

Specifically, in this embodiment, when the power circuit unit includes a relatively large number of circuit assemblies, the current that the switch bears is relatively large. To distribute the current that the switch bears, the switch is configured as a switch assembly including a plurality of switches that are connected in parallel. The switch of the power circuit unit is a switch assembly including switches K1, K2, K3, and K4 (not shown) that are connected in parallel. During an actual operating process of the main inductor circuit unit, all the switches of the switch assembly need to be opened and closed simultaneously. Herein, to ensure the operational synchronization of the four switches K1 to K4, parameters of the switches K1, K2, K3, and K4 included in the switch assembly should be consistent.

Preferably, component parameters of the plurality of circuit assemblies included in each power circuit unit are consistent.

Specifically, in this embodiment, parameters of the capacitors and the transformers of the plurality of circuit assemblies connected to the main inductor of each power circuit unit need to be consistent, to ensure that each circuit has a consistent power when the capacitors of the circuit assemblies do not allow abrupt voltage changes. In a case of poor parameter consistency, the power circuit may have a stability problem, and cannot operate normally in a severe case.

Preferably, a range of a leakage inductance value of the transformer of the power circuit is less than 1.5%.

Specifically, during the operation of the power circuit unit, when the switch is closed, the input power supply charges the main inductor. At the moment when the switch is opened, the current in the primary winding of the transformer changes significantly. In this case, leakage inductance of the transformer may cause a large voltage peak across the switch, resulting in a probability of breakdown and damage of the switch. To ensure a high electric energy conversion rate and better stability of the power circuit, an optimal range of the leakage inductance value of the transformer is less than 1.5%.

Further, a specific structure of the transformer of the power circuit of the present application is not limited herein. Any solution of a transformer structure that can realize leakage inductance of less than 1.5% in any conventional or future technology shall fall within the scope of protection of the present application, provided that the solution can be directly applied to a function of the transformer in the power circuit unit of this embodiment or can be applied to this embodiment after adaptive modifications made by a person skilled in the art on the solution without creative efforts.

Preferably, the transformer of the power circuit has a structure of a copper foil or a U-shaped metal sheet, and a parallel winding.

Specifically, this embodiment discloses the structure and the winding manner of the transformer of the power circuit. A magnetic core structure of the transformer is a thin metal sheet or a U-shaped metal sheet, preferably a copper sheet. The winding manner for the primary side and the secondary side of the transformer is a parallel winding manner. In this way, the leakage inductance of the transformer can be reduced, and an operation requirement of the power circuit can be met.

The present application further provides a layout method for a scalable power circuit. A plurality of power circuit units of the power circuit are arranged in a matrix on a PCB circuit board.

Specifically, four types of components included in the plurality of power circuit units, that is, main inductors, switches, and capacitors and transformers in circuit assemblies, are arranged on the PCB circuit board in a matrix by category.

Specifically, in this embodiment, when the power circuit includes a plurality of power circuit units, and each power circuit unit includes a plurality of circuit assemblies, the components of the power circuit units are arranged on the PCB in a matrix. That is, the power circuit unit is used as a unit, and the capacitors and the transformers corresponding to the circuit assemblies included in the power circuit units are arranged in a matrix, to effectively dissipate heat and improve stability of the circuit.

Referring to FIG. 9, the present application further provides a method for implementing power factor correction and output requirement-based boosting/bucking based on the above scalable power circuit. The method includes the following steps.

Step S1: Obtain a current actual input current value, a current actual input voltage value, a current actual output voltage value, and a current actual output current value at a high frequency.

Step S2: Compare an obtained current actual output power with a target output power required by a connected load.

Step S3: Adjust an input current peak (I_in_peak) at a high frequency based on a result of the comparison between the current actual output power and the target output power.

Step S4: Determine a target input current value ($I_{target\ input\ current\ value} = I_{input\ current\ peak}$ * phase information) at a high frequency based on the input current peak (I_in_peak) and current input phase information (current input voltage/input voltage peak).

Step S5: Compare the current actual input current value with the target input current value, and determine duty cycle and frequency adjustment instruction information for the switch at a high frequency based on a result of the comparison.

Step S6: The switch of the power circuit executes the instruction information at a high frequency to control the charge and discharge time of the inductor in the power circuit, so that the current actual input current value of the power circuit approaches the target input current value as much as possible.

Specifically, in step S1, the current actual input current value, the current actual input voltage value, the current actual output voltage value, and the current actual output current value are obtained at the high frequency. A current actual input condition and an actual output condition of the power circuit need to be acquired at the high frequency. A specific obtaining or acquisition manner is not limited, and may be obtaining by an acquisition unit connected to the control centre or obtaining in another manner. The obtained information is transmitted to the control centre, for determining duty cycle and frequency adjustment instruction information for the switch. For a value of the high frequency, refer to a frequency of the switch of the power circuit. For example, the high frequency may be equal to the frequency of the switch, or may be less than the frequency of the switch. The value of the high frequency herein may change based on an actual situation, and is not specifically limited.

In step S2, the obtained current actual output power is compared with the target output power required by the connected load. When a usage scenario of the connected load or the power circuit is determined, the corresponding required target output power and target output voltage/current are relatively fixed. The current actual output power is compared with the target output power. When the current actual output power is greater than the target output power, it indicates that the actual output power is higher than the target output power, and the actual output power needs to be decreased. When the actual output power is less than the target output power, it indicates that the actual output does not meet the requirement for the target output power, and the actual output power needs to be increased.

In step S3, the input current peak (I_in_peak) is determined at the high frequency based on the result of the comparison between the actual output power and the target output power. If the actual output power is less than the target output power, the input current peak is increased, to increase the current actual output voltage or current and further increase the actual output power to meet the requirement of the load. If the actual output power is greater than the target output power, the input current peak is decreased, to decrease the current actual output voltage or current and further decrease the output power to meet the requirement of the load. A gap between the actual output power and the target output power needs to be considered for a degree of increasing or decreasing the input current peak. For example, if the gap exceeds a preset value, the degree of increasing the input current peak is increased, to meet the requirement of the load fast. Determining of the input current peak is a high-frequency determining and high-frequency adjustment process. A method for determining the degree of the increase/decrease is not limited, provided that the requirement of the load for the target output is met.

In step S4: the target input current value ($I_{\text{target input current value}} = I_{\text{input current peak}} *$ phase information) is determined at the high frequency based on the input current peak (I_in_peak) and the current input phase information (current input voltage/input voltage peak). The current input phase information is a ratio of the current actual input voltage provided by the current input power supply to the power circuit to a peak of the periodically fluctuating voltage provided by the input power supply to the power circuit. The target input current value is a product of the input current peak determined in step S3 and the phase information, that is:

$$I_{\text{input target current value}} = I\_in\_peak * V_{\text{current actual input voltage}} / V_{\text{input voltage peak}}$$

In step S5, the current actual input current value is compared with the target input current value, and the duty cycle and frequency adjustment instruction information for the switch is determined at the high frequency. Specifically, when the current actual input current value is less than the target input current value, instruction information of controlling the switch to reduce the frequency and increase the duty cycle of the switch is generated by the control centre, to control the operating state of the switch and further control the charge time of the inductor, thereby increasing the input current and meeting a power factor correction requirement. In addition, the current actual input current approaches the target input current value, to implement output control. Otherwise, when the current actual input current value is greater than the target input current value, instruction information of controlling the switch to increase the frequency and reduce the duty cycle of the switch is generated in the control centre, to control the operating state of the switch and further control the charge time of the inductor, thereby decreasing the input current and meeting a power factor correction requirement. In addition, the current actual input current approaches the target input current value, to implement output control. Specifically, a degree of controlling the switch to reduce or increase the duty cycle of the switch and increase or reduce the frequency of the switch needs to be determined based on the gap between the current actual input current value and the target input current value. A specific implementation manner and process are not limited, and a person of ordinary skill in the art may try for setting based on an actual scenario. In addition, the target input current value herein includes the phase information of the current input voltage, that is, the phase information of the current input power supply is considered when the current actual input current value is adjusted based on the target input current value, so that it is ensured that the current actual input current value keeps approaching the target input current value and fluctuates around the target input current value. Therefore, the power circuit has a power factor correction (PFC) capability.

In step S6, the switch of the power circuit executes the instruction information at the high frequency to control the charge and discharge time of the inductor in the power circuit, so that the current actual input current value of the power circuit approaches the target input current value as much as possible. Specifically, the switch of the power circuit executes, at the high frequency, a current duty cycle or frequency adjustment instruction sent by the control centre, to control the charge and discharge time and frequency of the inductor of the power circuit, so that the current actual input current value of the power circuit approaches the target input current value as much as possible. In this way, the output power is controlled while power factor correction is implemented, that is, dynamic boosting/bucking adjustment is implemented based on the output requirement.

Another objective of the present application is to provide a control method for the above scalable power circuit system. The method includes:

Step S1 (not shown): Acquire an input voltage/current and an output voltage/current of the power circuit.

Specifically, in this step, the acquired output voltage/current of the power circuit includes but is not limited to information such as a requirement of a load connected to the power circuit for electric energy, a current output voltage, current, and power of the power circuit, etc.

Step S2 (not shown): The control centre generates control information for operating states of the switches of the power circuit units based on the information acquired in S1.

Specifically, in this embodiment, the control information is duty cycle and frequency information of the switches. For a specific method for generating the control information, refer to the above boosting/bucking method, and no specific limitation is imposed, provided that the technical solution of the present application can be satisfied.

Step S3 (not shown): The control centre simultaneously sends the control information to the switches of all the power circuit units disposed in the power circuit.

Specifically, in this step, the control centre simultaneously sends the same control information to the switches of all the connected power circuit units, to ensure that the operating states of all the switches are consistent.

Step S4 (not shown): The switches of the power circuit units execute an instruction of the control information.

Specifically, the switches of all the power circuit units execute the same instruction information, to ensure consistency and stability of the power circuit system of the present application.

Another objective of the present application is to provide a control method for the above scalable power circuit system. The method includes the following steps.

Step S1 (not shown): Acquire output voltage/current information of the power circuits and voltage/current information of the input power supply connected to each phase.

Specifically, information acquisition in this step may be implemented by a sensor, a monitor, etc. A specific implementation form and components are not limited, provided that voltage/current information of each phase of input of the power circuit and output voltage/current information of the entire power circuit can be obtained in this embodiment. The output voltage/current information of the power circuit includes but is not limited to current output voltage/current information, and further includes information such as an output voltage/current required by the load connected to the power circuit.

Step S2 (not shown): The control unit of each phase generates, based on the voltage/current information of the input power supply for each phase that is acquired in step S1, first control information for controlling the switches of all the power circuit units connected to each phase, and transmits the first control information to the control centre.

Step S3 (not shown): The control centre adjusts, based on an output requirement of the load on the entire power circuit, the first control information provided by the control unit of each phase, to generate second control information.

Step S4 (not shown): The control centre sends the second control information to the switches of the power circuit units of the corresponding phase.

Specifically, this embodiment describes the control method for the scalable power circuit system connected to the three-phase power. The three-phase power includes three phases: the phase A, the phase B, and the phase C. The power circuit is connected to each phase. The connected power circuit includes m power circuit units, and each power circuit unit includes n circuit assemblies. The power circuit system further includes a control unit corresponding to each phase. The control unit is connected to the information acquisition module and the control centre, and is configured to generate first control information based on phase information corresponding to an input of each phase of the power circuit system, which is acquired by the information acquisition module, and transmit the first control information to the control centre. The control centre receives the first control information that is sent by the control unit and that carries the phase information of the corresponding phase, generates second control information based on the output voltage/current information of the current power circuit that is acquired by the information acquisition module and requirements of the load for the output voltage/current, etc. of the entire power circuit, and transmits the second control information to switches of all power circuit units connected to the corresponding phase, to control operating states of the switches. The power circuit system of this embodiment can achieve scalability for connection to the three-phase power, extending ranges of the output voltage and the output power. In addition, since the switches of all the power circuit units connected to the three-phase power are directly controlled by the control centre, the power circuit system of this embodiment exhibits high consistency and stability.

Specifically, FIG. 8-1, FIG. 8-2 and FIG. 8-3 show power circuits including three power circuit units respectively connected to the phase A, the phase B, and the phase C. Switches of the three power circuit units connected to the three phases A/B/C are directly controlled by the control centre, that is, operating states of the switches of the power circuit units connected to the phases are consistent.

The technical features in the above embodiments may be combined in any manner. For the purpose of simplicity in description, not all possible combinations of the technical features in the above embodiments are described. However, as long as the combinations of these technical features do not conflict with each other, the combinations shall all fall within the scope of the description.

The above embodiments merely represent several implementations of the present application, giving specifics and details thereof, but should not be understood as limiting the scope of the present patent of invention thereby. It should be noted that a person of ordinary skill in the art could also make several alterations and improvements without departing from the spirit of the present application and these would all fall within the scope of protection of the present application. Therefore, the scope of protection of the present patent application shall be in accordance with the appended claims.

Table 1

| Embodiments | Inductance of the inductor / μH | Primary side of the transformer / μH | Primary-secondary ratio of the transformer | Capacitance of the capacitor / nF | Frequency of the switch / K | Duty cycle % of the switch | Input type | Input voltage/V | Input current / A | Input power / W | Input voltage maximum | Output type | Load | Output voltage / V | Output current / A | Output voltage maximum | Efficiency |
|---|---|---|---|---|---|---|---|---|---|---|---|---|---|---|---|---|---|
| 1 | 502.3 | 150.2 | 1:1 | 110 | 60 to 170 | 20 to 70 | DC | 305.20 | 1.66 | 505.11 | 305.20 | DC | 184.10 | 302.36 | 1.64 | 302.36 | 98.30% |
| 2 | 907.6 | 16.2 | 1:4 | 1500 | 80 to 120 | 50 to 60 | DC | 50.30 | 4.24 | 213.37 | 50.30 | DC | 304.67 | 251.50 | 0.83 | 251.50 | 97.30% |
| 3 | 600.3 | 150.2 | 1:1 | 100 | 120 to 170 | 45 to 55 | AC | 379.98 | 2.29 | 871.09 | 537.30 | DC | 338.86 | 537.29 | 1.59 | 537.29 | 97.80% |
| 4 | 907.7 | 10.3 | 1:5 | 3000 | 60 to 100 | 45 to 55 | DC | 40.70 | 5.47 | 222.49 | 45.70 | DC | 244.86 | 230.0 | 0.94 | 230.00 | 97.10% |
| 5 | 998.7 | 30.5 | 1:2 | 770 | 60 to 170 | 20 to 70 | DC | 50.20 | 3.12 | 156.67 | 50.20 | DC | 150.70 | 145.95 | 1.02 | 149.95 | 97.80% |
| 6 | 900.2 | 15.1 | 1:4 | 800 | 80 to 120 | 50 to 60 | DC | 50.00 | 5.39 | 269.67 | 50.00 | DC | 238.20 | 250.00 | 1.05 | 250.00 | 97.30% |
| 7 | 899.6 | 10.0 | 1:4 | 3000 | 120 to 170 | 50 to 60 | DC | 60.30 | 6.50 | 392.11 | 60.30 | DC | 105.06 | 200.00 | 1.90 | 200.00 | 97.10% |
| 8 | 300.0 | 1,000.0 | 1:1 | 200 | 80 to 120 | 45 to 55 | DC | 200.00 | 1.18 | 236.12 | 200.00 | DC | 192.13 | 210.10 | 1.09 | 210.10 | 97.30% |
| 9 | 907.6 | 20.1 | 1:3 | 1,000 | 80 to 120 | 45 to 55 | DC | 60.15 | 3.68 | 221.65 | 60.20 | DC | 186.02 | 200.50 | 1.08 | 200.50 | 97.50% |
| 10 | 907.6 | 150.3 | 1:1 | 200 | 120 to 170 | 45 to 55 | DC | 362.88 | 2.26 | 820.16 | 362.90 | DC | 202.88 | 403.20 | 2.00 | 403.20 | 98.20% |
| 11 | 603.4 | 15.0 | 1:4 | 2900 | 60 to 100 | 45 to 55 | DC | 49.30 | 5.23 | 257.92 | 49.30 | DC | 155.76 | 197.20 | 1.27 | 197.20 | 96.80% |
| 12 | 240.8 | 950.0 | 1:1 | 300 | 80 to 120 | 55 to 65 | AC | 220.60 | 1.71 | 377.87 | 311.90 | DC | 300.30 | 440.90 | 0.83 | 440.90 | 96.50% |
| 13 | 998.7 | 30.4 | 1:2 | 220 | 60 to 120 | 55 to 65 | DC | 50.40 | 4.56 | 229.72 | 50.40 | DC | 108.45 | 155.23 | 1.43 | 155.23 | 96.72% |
| 14 | 998.7 | 30.4 | 1:3 | 220 | 60 to 120 | 45 to 55 | DC | 50.40 | 4.34 | 218.65 | 50.40 | DC | 110.24 | 152.83 | 1.39 | 152.83 | 96.90% |

EP 4 723 452 A1

| Embodiments | Inductance of the inductor / μH | Primary side of the transformer / μH | Primary-secondary ratio of the transformer | Capacitance of the capacitor / nF | Frequency of the switch / K | Duty cycle % of the switch | Input type | Input voltage/V | Input current / A | Input power / W | Input voltage maximum | Output type | Load | Output voltage / V | Output current / A | Output voltage maximum | Efficiency |
|---|---|---|---|---|---|---|---|---|---|---|---|---|---|---|---|---|---|
| 15 | 999.7 | 15.0 | 1:2 | 221 | 60 to 120 | 30 to 40 | DC | 50.17 | 9.16 | 459.69 | 50.17 | DC | 53.29 | 153.83 | 2.89 | 153.83 | 96.60% |
| 16 | 901.3 | 15.0 | 1:2 | 1500 | 80 to 120 | 30 to 40 | DC | 51.20 | 5.15 | 263.83 | 51.20 | DC | 53.80 | 117.76 | 2.19 | 117.76 | 97.70% |
| 17 | 300.0 | 950.0 | 1:1 | 50 | 80 to 120 | 45 to 55 | AC | 200.60 | 1.18 | 235.83 | 283.60 | DC | 375.07 | 292.16 | 0.78 | 292.16 | 96.50% |
| 18 | 907.1 | 200.9 | 1:1 | 105 | 80 to 120 | 35 to 45 | DC | 300.10 | 1.99 | 596.42 | 300.10 | DC | 154.96 | 300.65 | 1.94 | 300.65 | 97.80% |
| 19 | 310.3 | 50.3 | 2:1 | 800 | 60 to 100 | 25 to 35 | AC | 379.98 | 3.90 | 1480.30 | 537.30 | DC | 7.95 | 107.46 | 13.51 | 107.46 | 98.10% |
| 20 | 400.2 | 204.1 | 5:1 | 200 | 80 to 120 | 35 to 45 | DC | 600.30 | 2.86 | 1715.15 | 600.30 | DC | 3.36 | 75.04 | 22.35 | 75.04 | 97.80% |
| 21 | 350.2 | 250.7 | 3:1 | 500 | 80 to 120 | 35 to 45 | DC | 600.30 | 2.51 | 1508.38 | 600.30 | DC | 9.73 | 120.06 | 12.34 | 120.06 | 98.20% |
| 22 | 1985.8 | 90.8 | 4:1 | 220 | 60 to 170 | 20 to 70 | AC | 220.17 | 4.87 | 1072.23 | 311.10 | DC | 20.00 | 43.12 | 24.10 | 43.12 | 96.92% |
| 23 | 900.3 | 150.3 | 1:5 | 200 | 80 to 120 | 45 to 55 | DC | 379.91 | 3.83 | 1454.06 | 537.20 | DC | 8.23 | 107.44 | 13.05 | 107.44 | 96.40% |
| 24 | 310.3 | 55.2 | 2:1 | 790 | 60 to 100 | 25 to 35 | AC | 379.98 | 3.40 | 1292.33 | 537.29 | DC | 8.46 | 103.33 | 12.22 | 103.33 | 97.70% |
| 25 | 310.3 | 100.8 | 2:1 | 210 | 80 to 120 | 20 to 30 | DC | 670.30 | 1.66 | 1114.65 | 670.30 | DC | 7.20 | 88.20 | 12.25 | 88.20 | 96.90% |
| 26 | 250.3 | 240.2 | 2:1 | 210 | 60 to 80 | 20 to 30 | DC | 670.30 | 1.86 | 1245.41 | 670.30 | DC | 10.36 | 111.72 | 10.78 | 111.72 | 96.70% |
| 27 | 230.8 | 55.2 | 3:1 | 220 | 60 to 120 | 30 to 40 | DC | 211.15 | 5.73 | 1209.97 | 211.15 | DC | 1.50 | 41.83 | 27.94 | 41.83 | 96.58% |
| 28 | 633.3 | 55.2 | 4:1 | 440 | 60 to 120 | 30 to 40 | AC | 220.25 | 6.10 | 1344.50 | 311.43 | DC | 2.11 | 52.38 | 24.85 | 52.38 | 96.81% |

| Embodiments | Inductance of the inductor / μH | Primary side of the transformer / μH | Primary-secondary ratio of the transformer | Capacitance of the capacitor / nF | Frequency of the switch / K | Duty cycle % of the switch | Input type | Input voltage/V | Input current / A | Input power / W | Input voltage maximum | Output type | Load | Output voltage / V | Output current / A | Output voltage maximum | Efficiency |
|---|---|---|---|---|---|---|---|---|---|---|---|---|---|---|---|---|---|
| 29 | 300.2 | 65.5 | 2:1 | 660 | 60 to 120 | 20 to 30 | AC | 380.11 | 3.05 | 1159.17 | 537.48 | DC | 9.12 | 100.77 | 11.05 | 100.77 | 96.03% |
| 30 | 933.3 | 150.3 | 4:1 | 790 | 60 to 120 | 30 to 40 | AC | 379.86 | 3.05 | 1158.57 | 537.12 | DC | 4.50 | 70.94 | 15.76 | 70.94 | 96.48% |
| 31 | 301.7 | 80.7 | 4:1 | 790 | 60 to 120 | 30 to 40 | AC | 379.86 | 4.86 | 1847.70 | 537.12 | DC | 3.04 | 73.43 | 24.18 | 73.43 | 96.09% |
| 32 | 503.1 | 80.8 | 2:1 | 440 | 60 to 100 | 45 to 55 | DC | 250.80 | 4.90 | 1227.88 | 250.80 | DC | 209.30 | 501.60 | 2.40 | 501.60 | 97.90% |
| 33 | 903.6 | 250.3 | 1:2 | 50 | 120 to 170 | 50 to 60 | DC | 538.90 | 2.60 | 1402.68 | 538.90 | DC | 94.57 | 359.27 | 3.80 | 359.27 | 97.30% |
| 34 | 300.4 | 30.0 | 1:2 | 3000 | 80 to 120 | 45 to 55 | DC | 200.70 | 8.00 | 1605.58 | 200.70 | DC | 103.03 | 401.40 | 3.90 | 401.40 | 97.40% |
| 35 | 230.7 | 999.5 | 1:1 | 80 | 60 to 100 | 50 to 60 | AC | 380.10 | 3.28 | 1246.66 | 537.50 | DC | 345.05 | 644.95 | 1.87 | 644.95 | 96.70% |
| 36 | 799.6 | 150.2 | 1:1 | 220 | 60 to 170 | 20 to 70 | AC | 380.10 | 2.74 | 1040.71 | 537.40 | DC | 233.90 | 488.24 | 2.09 | 488.24 | 97.93% |
| 37 | 1502.1 | 150.2 | 1:1 | 220 | 60 to 170 | 20 to 70 | AC | 379.30 | 2.93 | 1110.21 | 537.40 | DC | 178.50 | 440.94 | 2.47 | 440.94 | 98.13% |
| 38 | 150.2 | 298.5 | 1:1 | 220 | 60 to 170 | 20 to 70 | AC | 381.30 | 2.71 | 1033.70 | 537.40 | DC | 158.40 | 398.75 | 2.52 | 398.75 | 97.09% |
| 39 | 788.6 | 148.9 | 1:1 | 2900 | 60 to 100 | 50 to 60 | DC | 300.40 | 4.51 | 1355.22 | 300.40 | DC | 138.67 | 429.14 | 3.09 | 429.14 | 98.00% |
| 40 | 788.6 | 166.3 | 1:2 | 55 | 120 to 170 | 35 to 45 | DC | 599.50 | 2.15 | 1286.39 | 599.50 | DC | 558.77 | 839.30 | 1.50 | 839.30 | 98.00% |
| 41 | 933.9 | 35.0 | 1:2 | 200 | 120 to 170 | 35 to 45 | DC | 343.80 | 5.50 | 1889.52 | 343.80 | DC | 131.75 | 491.14 | 3.73 | 491.14 | 96.90% |
| 42 | 230.7 | 950.1 | 1:1 | 1500 | 60 to 100 K | 50 to 60 | AC | 380.10 | 3.05 | 1160.89 | 537.46 | DC | 311.36 | 591.21 | 1.90 | 591.21 | 96.70% |

| Embod iments | Inductance of the inductor / μH | Primary side of the transformer / μH | Primary-secondary ratio of the transformer | Capacita nce of the capacitor / nF | Frequency of the switch / K | Duty cycle % of the switch | Input type | Input voltage/V | Input current / A | Input power / W | Input voltage maximum | Output type | Load | Output voltage / V | Output current / A | Output voltage maximum | Efficiency |
|---|---|---|---|---|---|---|---|---|---|---|---|---|---|---|---|---|---|
| 43 | 901.5 | 110.3 | 1:1 | 105 | 80 to 120 | 45 to 55 | DC | 300.10 | 4.00 | 1200.95 | 300.10 | DC | 78.22 | 303.10 | 3.88 | 303.10 | 97.80% |
| 44 | 300.9 | 150.2 | 1:1 | 220 | 60 to 120 | 40 to 50 | AC | 380.20 | 3.19 | 1213.54 | 537.60 | DC | 142.41 | 410.30 | 2.88 | 410.32 | 97.41% |
| 45 | 300.9 | 110.5 | 1:1 | 220 | 60 to 120 | 40 to 50 | AC | 379.70 | 4.32 | 1639.50 | 536.90 | DC | 104.71 | 408.30 | 3.90 | 408.30 | 97.11% |
| 46 | 300.9 | 95.1 | 1:1 | 220 | 60 to 120 | 40 to 50 | AC | 381.30 | 5.11 | 1948.25 | 539.16 | DC | 91.44 | 415.30 | 4.54 | 415.39 | 96.81% |
| 47 | 601.2 | 60.5 | 1:1 | 440 | 100 to 170 | 35 to 45 | AC | 379.70 | 3.89 | 1477.57 | 536.90 | DC | 91.03 | 361.40 | 3.97 | 361.46 | 97.11% |
| 48 | 900.9 | 100.7 | 1:1 | 600 | 100 to 170 | 50 to 60 | AC | 381.30 | 5.05 | 1924.21 | 539.16 | DC | 315.84 | 765.30 | 2.42 | 765.38 | 96.37% |
| 49 | 253.9 | 50.1 | 2:1 | 800 | 50 to 90 | 25 to 35 | AC | 380.10 | 5.37 | 2042.96 | 537.50 | DC | 5.77 | 107.49 | 18.63 | 107.49 | 98.00% |
| 50 | 253.9 | 249.1 | 2:1 | 200 | 60 to 100 | 45 to 55 | DC | 498.50 | 5.39 | 2685.91 | 498.50 | DC | 23.82 | 249.25 | 10.46 | 249.25 | 97.10% |
| 51 | 481.2 | 200.3 | 2:1 | 800 | 60 to 120 | 25 to 35 | DC | 1013.55 | 5.08 | 5147.81 | 1013.60 | DC | 12.56 | 249.12 | 19.84 | 249.12 | 96.01% |
| 52 | 1581.7 | 200.3 | 1:1 | 800 | 60 to 120 | 25 to 35 | DC | 903.95 | 2.92 | 2643.29 | 904.00 | DC | 78.91 | 449.12 | 5.69 | 449.12 | 96.71% |
| 53 | 1502.1 | 66.3 | 2:1 | 510 | 60 to 170 | 20 to 70 | AC | 220.52 | 9.51 | 2097.15 | 311.10 | DC | 178.50 | 200.77 | 10.06 | 200.77 | 96.33% |
| 54 | 1432.6 | 11.2 | 1:1 | 220 | 60 to 170 | 20 to 70 | DC | 599.80 | 17.64 | 10580.47 | 599.80 | DC | 1.80 | 537.91 | 18.89 | 537.91 | 96.02% |
| 55 | 913.6 | 160.1 | 1:1 | 400 | 120 to 170 | 25 to 35 | DC | 943.95 | 2.41 | 2272.55 | 943.95 | DC | 78.35 | 414.76 | 5.29 | 414.76 | 96.61% |
| 56 | 253.9 | 55.1 | 2:1 | 790 | 60 to 100 | 25 to 35 | DC | 466.80 | 4.85 | 2263.27 | 466.80 | DC | 4.26 | 97.25 | 22.81 | 97.25 | 98.00% |

EP 4 723 452 A1

| Embod iments | Inductance of the inductor / $\mu$H | Primary side of the transformer / $\mu$H | Primary-secondary ratio of the transformer | Capacita nce of the capacitor / nF | Frequency of the switch / K | Duty cycle % of the switch | Input type | Input voltage/V | Input current / A | Input power / W | Input voltage maximum | Output type | Load | Output voltage / V | Output current / A | Output voltage maximum | Efficiency |
|---|---|---|---|---|---|---|---|---|---|---|---|---|---|---|---|---|---|
| 57 | 253.9 | 240.0 | 2:1 | 500 | 60 to 100 | 45 to 55 | DC | 603.80 | 5.68 | 3426.88 | 603.80 | DC | 12.14 | 201.27 | 16.58 | 201.27 | 97.40% |
| 58 | 1433.6 | 160.3 | 2:1 | 600 | 120 to 170 | 40 to 50 | DC | 998.29 | 4.83 | 4825.23 | 998.29 | DC | 35.36 | 404.91 | 11.45 | 404.91 | 96.10% |
| 59 | 913.6 | 149.1 | 2:1 | 600 | 100 to 150 | 35 to 45 | DC | 973.38 | 5.03 | 4895.11 | 973.38 | DC | 20.57 | 311.40 | 15.14 | 311.40 | 96.31% |
| 60 | 901.3 | 15.3 | 5:1 | 1500 | 80 to 120 | 45 to 55 | DC | 51.20 | 4.42 | 226.09 | 51.20 | DC | 298.83 | 256.00 | 0.86 | 256.00 | 97.00% |
| 61 | 900.3 | 250.7 | 4:1 | 50 | 120 to 170 | 30 to 40 | AC | 379.98 | 0.74 | 283.08 | 537.30 | DC | 16.44 | 67.16 | 4.08 | 67.16 | 96.90% |
| 62 | 900.3 | 300.6 | 4:1 | 30 | 120 to 170 | 30 to 40 | AC | 381.18 | 0.65 | 247.88 | 539.00 | DC | 18.67 | 67.37 | 3.61 | 67.37 | 98.10% |
| 63 | 1985.8 | 35.1 | 3:1 | 220 | 60 to 120 | 25 to 35 | AC | 220.15 | 5.80 | 1277.93 | 311.29 | DC | 1.42 | 41.83 | 29.51 | 41.83 | 96.58% |
| 64 | 933.3 | 30.5 | 3:1 | 660 | 60 to 120 | 25 to 35 | AC | 219.75 | 5.27 | 1158.12 | 310.73 | DC | 1.53 | 41.39 | 27.08 | 41.39 | 96.78% |

Table 2

| Embodiments | n circuit assemblies | Inductance of the main inductor / μH | Primary side of the transformer / μH | Primary-secondary ratio | Capacitance / nF | Frequency of the switch / K | Duty cycle % of the switch | Input type | Effective value of the input voltage / V | Effective value of the input current / A | Input power / W | Output type | Load / Ω | Output voltage / V | Output current / A | Efficiency |
|---|---|---|---|---|---|---|---|---|---|---|---|---|---|---|---|---|
| 1 | n=1 | 799.6 | 70.3 | 1:1 | 220 | 60 to 170 | 20 to 50 | 380 V AC | 380.1 | 8.138 | 3093.2538 | DC | 81.7 | 488.18 | 5.98 | 94.35% |
| 2 | n=2 | 799.6 | 110.2/149.8 | 1:1 | 220 | 60 to 170 | 20 to 50 | 380 V AC | 380.2 | 5.501 | 2091.4802 | DC series | 484.5 | 993.87 | 2.05 | 97.48% |
| 3 | n=3 | 799.6 | 150.2/149.8/150.6 | 1:1 | 220 | 60 to 170 | 20 to 50 | 380 V AC | 380.1 | 5.488 | 2085.9888 | DC parallel | 121.5 | 497.74 | 4.10 | 97.71% |
| 4 | n=12 | 799.6 | Approximately 150 | 1:1 | 220 | 60 to 170 | 20 to 50 | 380 V AC | 379.9 | 32.669 | 12410.9531 | DC parallel | 18.5 | 471.87 | 25.56 | 97.19% |

Table 3

| Embodiments | m:n | Inductance of the inductor / μH | Primary side of the transformer / μH | Primary-secondary ratio of the transformer | Capacitance / nF | Frequency of the switch / K | Duty cycle % of the switch | Input type | Input voltage / V | Input current / A | Input power / W | Output type | Load / Ω | Output voltage / V | Output current / A | Efficiency |
|---|---|---|---|---|---|---|---|---|---|---|---|---|---|---|---|---|
| 1 | 1:1 | 793.1 | 110.2 | 1:1 | 220 | 60 to 170 | 20 to 50 | 380 V AC | 380.3 | 4.43 | 1685.109 | DC | 144.8 | 488.24 | 3.372 | 97.69% |
| 2 | 6:4 | 500±15 | 110±1 | 1:1 | 220 | 60 to 170 | 20 to 50 | 380 V three-phase | 380.1 | 106.88 | 40625.468 | DC | 248 | 988.04 | 39.789 | 96.77% |
| 3 | 12:2 | 800±15 | 110±1 | 1:1 | 220 | 60 to 170 | 20 to 50 | 380 V three-phase | 380.2 | 106.44 | 40468.108 | DC | 22.0 | 931.36 | 42.247 | 97.23% |
| 4 | 12:3 | 800±15 | 150±1 | 1:1 | 220 | 60 to 170 | 20 to 50 | 380 V three-phase | 380.1 | 105.34 | 40039.734 | DC | 22.3 | 934.18 | 41.828 | 97.59% |
| 5 | 2:2 | 800±15 | 110±1 | 1:1 | 220 | 60 to 170 | 20 to 50 | 220V three-phase | 220.4 | 28.59 | 6301.236 | DC | 134.1 | 902.92 | 6.731 | 96.45% |

**Claims**

1. A scalable power circuit system, **characterized in that** the power circuit system comprises:

an information acquisition module configured to acquire input voltage/current information and output voltage/-current information of a power circuit;

a control centre connected to the information acquisition device and configured to generate, based on the information acquired by the information acquisition device and an output requirement of a load on the power circuit, control information for controlling operating states of m switches of m power circuit units below, and simultaneously transmit the control information to the m switches; and

the power circuit comprising the m power circuit units, each power circuit unit comprising a main inductor, n circuit assemblies, and a switch connected to the control centre and configured to execute the control information sent by the control centre, wherein m and n each are a natural number greater than 1, and each of the circuit assemblies comprising a capacitor, a transformer, and an output half-wave rectifier module, wherein

input ends of the m power circuit units are connected in parallel to be connected to an input power supply, and output ends are connected in a series and/or parallel combination; and the switches of the m power circuit units are connected to the control centre, and are configured to receive and execute the control information provided by the control centre.

2. The scalable power circuit system according to claim 1, **characterized in that** when the switch of a corresponding power circuit unit is in a closed state, the input power supply forms a loop with the main inductor of the power circuit unit, and charges the main inductor, and the n capacitors and primary winding inductors of the n transformers of the n circuit assemblies of the power circuit unit that are connected in series to each other form n LC resonant circuits with the switch; and

when the switch of the corresponding power circuit unit is in an open state, the input power supply, the main inductor of the power circuit unit, and the n capacitors and primary windings of the n transformers of the n circuit assemblies comprised in the power circuit unit that are connected in series to each other form n LLC resonant circuits, and the input power supply, the charged main inductor, and the primary windings of the charged transformers charge the n capacitors of the n circuit assemblies, to convert energy to secondary windings of the transformers by changes in primary currents of the n transformers.

3. The scalable power circuit system according to claim 1, **characterized in that** the main inductor of the power circuit unit cooperates with the switch to participate in implementing power factor correction, and further implements dynamic boosting/bucking adjustment based on an input voltage and a requirement of the load for an output voltage of the power circuit.

4. The scalable power circuit system according to claim 1, **characterized in that** when the input power supply provides AC power, the power circuit further comprises an input rectifier module configured to rectify the AC power into DC power, wherein a plurality of power circuit units of the m power circuit units share one input rectifier module.

5. The scalable power circuit system according to claim 1, **characterized in that** output ends of the circuit assemblies of a plurality of power circuit units of the m power circuit units share one output rectifier unit.

6. The scalable power circuit system according to any one of claims 1 to 5, **characterized in that** the output half-wave rectifier module of the circuit assembly implements half-wave rectification by a diode.

7. The scalable power circuit system according to any one of claims 1 to 5, **characterized in that** the output half-wave rectifier module implements half-wave rectification by a first switch and a first controller that controls the first switch.

8. The scalable power circuit system according to claim 7, **characterized in that** the first controller controls an operating mode of the first switch based on control of the control centre of the power circuit over operating modes of the switches of the power circuit units.

9. The scalable power circuit system according to any one of claims 1 to 5 and 8, **characterized in that** the switch of the power circuit unit is at least one of a bidirectional switch, a controllable switching device, or a circuit assembly.

10. The scalable power circuit system according to any one of claims 1 to 5 and 8, **characterized in that** a range of a leakage inductance value of the transformer of the power circuit is less than 1.5%.

11. The scalable power circuit system according to any one of claims 1 to 5 and 8, **characterized in that** the transformer of the power circuit has a structure of a copper foil or a U-shaped metal sheet, and a parallel winding.

12. A scalable power circuit system based on three-phase power, **characterized in that** when an input power supply provides A/B/C three-phase AC power, the power circuit according to any one of claims 1 to 11 is connected to each phase, wherein

the power circuit further comprises an input rectifier module for rectifying the three-phase power into DC power, and the power circuit system further comprises a phase-A control unit, a phase-B control unit and a phase-C control unit that are connected to the control centre and the information acquisition module and configured to generate first control information based on input voltage/current information of a corresponding phase of phases A/B/C of the input power supply that is acquired by the information acquisition module, and transmit the first control information to the control centre; and

the control centre adjusts the first control information based on an output requirement of a load on the entire power circuit system and current output voltage/current information of the power circuits, which are acquired by the information acquisition module, to generate second control information corresponding to each of the phases A/B/C, and transmits the second control information to a switch of the power circuit corresponding to a corresponding phase of the phases A/B/C.

13. The scalable power circuit system according to claim 12, **characterized in that** numbers of power circuit units and circuit assemblies comprised in the power circuits connected to the phases, and component parameters of the circuit assemblies are consistent.

14. A layout method for a scalable power circuit, **characterized in that** a plurality of power circuit units comprised in the power circuit system are arranged in a matrix on a PCB circuit board.

15. The layout method for a scalable power circuit according to claim 14, **characterized in that** four types of components comprised in the plurality of power circuit units, that is, main inductors, switches, and capacitors and transformers of circuit assemblies, are arranged in a matrix on the PCB circuit board by category.

16. A method for implementing power factor correction and dynamic boosting/bucking adjustment based on a scalable power circuit system, **characterized in that** the method comprises:

step S1: obtaining a current actual input current value, a current actual input voltage value, a current actual output voltage value, and a current actual output current value at a high frequency;

step S2: comparing an obtained current actual output power with a target output power required by a connected load;

step S3: adjusting an input current peak at a high frequency based on a result of the comparison between the current actual output power and the target output power;

step S4: determining a target input current value at a high frequency based on the input current peak and current input phase information;

step S5: comparing the current actual input current value with the target input current value, and determining duty cycle and frequency adjustment instruction information for a switch at a high frequency based on a result of the comparison; and

step S6: executing, by the switch of a power circuit, the instruction information at a high frequency to control charge and discharge time of an inductor of the power circuit, so that the current actual input current value of the power circuit approaches the target input current value as much as possible.

17. A control method for the scalable power circuit system according to any one of claims 1 to 11, **characterized in that** the method comprises:

step S1: acquiring an input voltage/current and an output voltage/current of the power circuit;

step S2: generating, by the control centre, control information for operating states of the switches of the power circuit units based on the information acquired in S1;

step S3: simultaneously sending the control information to the switches of all the power circuit units disposed in the power circuit; and

step S4: executing, by the switches of the power circuit units, an instruction of the control information.

18. A control method for the scalable power circuit system according to claim 12 or 13, **characterized in that** the method comprises:

step S1: acquiring output voltage/current information of the power circuits and voltage/current information of the input power supply connected to each phase;

step S2: generating, by the control unit of each phase based on the voltage/current information of the input power supply for each phase that is acquired in step S1, first control information for controlling the switches of all the power circuit units connected to each phase, and transmitting the first control information to the control centre;

step S3: adjusting, by the control centre based on an output requirement of a load on the entire power circuit and current output voltage/current information of the power circuit, the first control information provided by the control unit of each phase, to generate second control information; and

step S4: sending, by the control centre, the second control information to the switches of the power circuit units of the corresponding phase, to control operating states of the switches.

FIG. 1

FIG. 2

FIG. 3

*FIG. 4*

*FIG. 5*

*FIG. 6*

*FIG. 7*

*FIG. 8-1*

*FIG. 8-2*

*FIG. 8-3*

| | S1 |
|---|---|
| Obtain a current actual input current value, a current actual input voltage value, a current actual output voltage value, and a current actual output current value at a high frequency | |

↓

| | S2 |
|---|---|
| Compare an obtained current actual output power with a target output power required by a connected load | |

↓

| | S3 |
|---|---|
| Adjust an input current peak at a high frequency based on a result of the comparison between the current actual output power and the target output power | |

↓

| | S4 |
|---|---|
| Determine a target input current value at a high frequency based on the input current peak and current input phase information | |

↓

| | S5 |
|---|---|
| Compare the current actual input current value with the target input current value, and determine duty cycle and frequency adjustment instruction information for a switch at a high frequency based on a result of the comparison | |

↓

| | S6 |
|---|---|
| The switch of a power circuit executes the instruction information at a high frequency to control charge and discharge time of an inductor of the power circuit, so that the current actual input current value of the power circuit approaches the target input current value as much as possible | |

*FIG. 9*

## INTERNATIONAL SEARCH REPORT

| International application No. |
| --- |
| **PCT/CN2023/130207** |

**A. CLASSIFICATION OF SUBJECT MATTER**

H02M1/00(2007.01)i; H02M1/42(2007.01)i; H02M3/335(2006.01)i

According to International Patent Classification (IPC) or to both national classification and IPC

**B. FIELDS SEARCHED**

Minimum documentation searched (classification system followed by classification symbols)

IPC: H02M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电感, 电容, 变压器, 库克, 功率因数, 功率因素, 功率因子, 电流, 电压, 功率, 峰值, 电路板, 线路板, 排列, 布局, 排布, inductor, capacitor, transformer, cuk, sepic, power, factor, current, voltage, peak, board, arrange

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116865528 A (SHENZHEN ENERTIME TECHNOLOGY CO., LTD.) 10 October 2023 (2023-10-10) description, paragraphs 6-249, and figures 3-9 | 1-18 |
| Y | KR 20180112361 A (POSTECH ACADEMY-INDUSTRY FOUNDATION) 12 October 2018 (2018-10-12) description, paragraphs 2-64, and figures 1-9 | 1-13, 17-18 |
| Y | DE 102010041618 A1 (OSRAM GMBH) 22 December 2011 (2011-12-22) description, paragraph 245, and figure 55a | 1-13, 17-18 |
| X | CN 111527686 A (PANASONIC INTELLECTUAL PROPERTY MANAGEMENT CO., LTD.) 11 August 2020 (2020-08-11) description, paragraphs 124-131, and figures 1 and 7 | 14-15 |
| X | CN 106169863 A (ZHEJIANG UNIVERSITY) 30 November 2016 (2016-11-30) description, paragraphs 5-64, and figures 1-2 | 16 |

[✓] Further documents are listed in the continuation of Box C.   [✓] See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **04 February 2024** | **07 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/130207** |

**C.    DOCUMENTS CONSIDERED TO BE RELEVANT**

| Category* | Citation of document, with indication, where appropriate, of the relevant passages | Relevant to claim No. |
|---|---|---|
| A | CN 109586603 A (CHINA UNIVERSITY OF PETROLEUM (EAST CHINA)) 05 April 2019 (2019-04-05)<br>    entire document | 1-18 |

Form PCT/ISA/210 (second sheet) (July 2022)

**INTERNATIONAL SEARCH REPORT**
Information on patent family members

International application No.

**PCT/CN2023/130207**

| Patent document cited in search report | | | Publication date (day/month/year) | Patent family member(s) | | | Publication date (day/month/year) |
|---|---|---|---|---|---|---|---|
| CN | 116865528 | A | 10 October 2023 | None | | | |
| KR | 20180112361 | A | 12 October 2018 | KR | 101920469 | B1 | 20 November 2018 |
| DE | 102010041618 | A1 | 22 December 2011 | None | | | |
| CN | 111527686 | A | 11 August 2020 | JPWO | 2019131620 | A1 | 10 December 2020 |
| | | | | JP | 7117673 | B2 | 15 August 2022 |
| | | | | DE | 112018006729 | T5 | 01 October 2020 |
| | | | | WO | 2019131620 | A1 | 04 July 2019 |
| | | | | US | 2020323101 | A1 | 08 October 2020 |
| | | | | US | 11388844 | B2 | 12 July 2022 |
| | | | | CN | 111527686 | B | 17 February 2023 |
| CN | 106169863 | A | 30 November 2016 | None | | | |
| CN | 109586603 | A | 05 April 2019 | None | | | |

Form PCT/ISA/210 (patent family annex) (July 2022)